# EUROPÄISCHE PATENTSCHRIFT

(11) **EP 3 037 670 B1**
(45) Veröffentlichungstag und Bekanntmachung des Hinweises auf die Patenterteilung: **31.07.2019**
(21) Anmeldenummer: 14199695.9
(22) Anmeldetag: 22.12.2014
(51) Int. Cl.: F04D 15/00, F04D 13/06, F04D 29/42, F24D 3/08, F24D 19/10

(54) **HYDRAULISCHES SYSTEM**
HYDRAULIC SYSTEM
SYSTÈME HYDRAULIQUE

(43) Veröffentlichungstag der Anmeldung: 29.06.2016
(73) Patentinhaber: Grundfos Holding A/S, 8850 Bjerringbro (DK)
(72) Erfinder: BLAD, Thomas, 8850 Bjerringbro (DK); BLAD, Christian, 9000 Aalborg (DK)
(74) Vertreter: Patentanwälte Vollmann Hemmer Lindfeld Partnerschaft mbB

(56) Entgegenhaltungen:
- EP-A1- 0 529 353
- EP-A1- 0 569 713
- EP-A1- 2 708 825
- EP-A2- 0 902 240
- EP-A2- 2 775 218
- DE-A1- 1 942 647
- DE-A1- 2 363 231
- FR-A1- 2 655 599
- GB-A- 2 318 179

## Beschreibung

Die Erfindung betrifft ein hydraulisches System.

Hydraulische Systeme, insbesondere hydraulische Kreislaufsysteme sind beispielsweise in Form von Heizung- und/oder Klimaanlagen bekannt, in welchen ein flüssiger Wärmeträger wie beispielweise Wasser in einem Kreislauf gefördert wird. Hierzu weisen die hydraulischen Systeme in der Regel zumindest ein Umwälzpumpenaggregat auf, welches die Flüssigkeit im System umwälzt.

Es ist auch bekannt, dass in derartigen hydraulischen Systemen Schalteinrichtungen wie beispielsweise Ventile angeordnet sein können. In Heizungsanlagen gibt es beispielsweise häufig Umschaltventile, welche ein Umschalten zwischen zwei hydraulischen Kreisen bzw. zwei Heizkreisen ermöglichen. So kann beispielsweise, je nach Schaltstellung eines solchen Ventils, in einer Heizungsanlage ein erwärmter Wärmeträger entweder durch einen Raumheizungskreis oder einen Wärmetauscher zum Erwärmen von Brauchwasser gefördert werden. Die dazu erforderlichen Umschaltventile werden in der Regel elektrisch angetrieben und angesteuert. Das heißt es sind elektrische Antriebe mit erforderlichen elektrischen Anschlüssen erforderlich.

EP 0 902 240 A2 offenbart ein hydraulisches System gemäß dem Oberbegriff des Anspruchs 1.

Es ist Aufgabe der Erfindung, ein hydraulisches System in der Weise zu vereinfachen, dass die Zahl erforderlicher elektrisch betätigter Schalteinrichtungen im System reduziert werden kann.

Diese Aufgabe wird durch ein hydraulisches System mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße hydraulische System weist zumindest ein Umwälzpumpenaggregat und zumindest einen mit diesem Umwälzpumpenaggregat verbundenen hydraulischen Kreis auf. Dabei ist der hydraulische Kreis mit dem Umwälzpumpenaggregat so verbunden, dass das Umwälzpumpenaggregat eine Flüssigkeit, beispielsweise Wasser, in dem hydraulischen Kreis umwälzt. Der hydraulische Kreis kann dabei beispielsweise eine Heizungs- oder Kühlanlage sein, in welcher ein flüssiger Wärmeträger, beispielsweise Wasser im Kreislauf gefördert wird. Bei dem Umwälzpumpenaggregat handelt es sich vorzugsweise um ein elektromotorisch angetriebenes Umwälzpumpenaggregat, z.B. ein Kreiselpumpenaggregat, insbesondere mit einem nasslaufenden elektrischen Antriebsmotor.

Das Umwälzpumpenaggregat weist erfindungsgemäß einen Drehzahlsteller auf, welcher es ermöglicht, das Umwälzpumpenaggregat mit zumindest zwei verschiedenen Drehzahlen zu betreiben. Vorzugsweise ist das Umwälzpumpenaggregat über den Drehzahlsteller über einen größeren Bereich in seiner Drehzahl einstellbar, d. h. die Drehzahl kann über einen größeren Drehzahlbereich in mehreren Stufen oder stufenlos verändert werden.

Neben dem Umwälzpumpenaggregat ist erfindungsgemäß in dem hydraulischen Kreis zumindest eine mechanische Schalteinrichtung angeordnet, welche mit dem Druck des im hydraulischen Kreis befindlichen Fluids bzw. der in dem hydraulischen Kreis befindlichen Flüssigkeit beaufschlagt wird. Die mechanische Schalteinrichtung ist in zumindest zwei unterschiedliche Schaltstellungen, d. h. zumindest in eine erste und eine zweite Schaltstellung, bewegbar.

Erfindungsgemäß ist vorgesehen, auf einen separaten, beispielsweise elektrischen Antrieb für die mechanische Schalteinrichtung zu verzichten und stattdessen das Umschalten zwischen den Schaltstellungen allein durch die Flüssigkeit bzw. das Fluid, welches sich in dem hydraulischen Kreis befindet, zu bewirken. Das heißt, erfindungsgemäß erfolgt eine Kraftübertragung von dem Umwälzpumpenaggregat auf die mechanische Schalteinrichtung über das in dem hydraulischen Kreis befindliche Fluid. Das bedeutet, die zumindest eine mechanische Schalteinrichtung ist mit dem Umwälzpumpenaggregat über das Fluid in dem hydraulischen Kreis hydraulisch gekoppelt, bevorzugt ausschließlich hydraulisch gekoppelt. Dabei ist bevorzugt keine weitere mechanische Kopplung zwischen dem Umwälzpumpenaggregat und der Schalteinrichtung vorgesehen. Insbesondere ist keine Kopplung zwischen dem Rotor bzw. dem Laufrad des Umwälzpumpenaggregates und der Schalteinrichtung über einen mechanischen Eingriff dieser Bauteile vorgesehen. Das heißt, bevorzugt ist eine ausschließlich hydraulische Kopplung über das Fluid vorgesehen.

Die hydraulische Kopplung ermöglicht es, über den Drehzahlsteller die Drehzahl des Umwälzpumpenaggregates anzupassen und darüber die Schalteinrichtung zu betätigen. Dazu wird durch die Drehzahlanpassung des Umwälzpumpenaggregates über den zumindest einen hydraulischen Kreis eine geeignete hydraulische Kraft erzeugt, welche über den hydraulischen Kreis auf die Schalteinrichtung wirkt und die Bewegung der Schalteinrichtung verursacht. So kann auf einen separaten Antrieb der Schalteinrichtung verzichtet werden. Die Schalteinrichtung wird vielmehr bevorzugt allein durch hydraulische Kräfte, welche über den hydraulischen Kreis übertragen werden, bewegt. Diese hydraulischen Kräfte können gezielt durch Drehzahlanpassung bzw. durch Steuerung der Drehzahl des Umwälzpumpenaggregates durch den Drehzahlsteller erzeugt werden. Vorzugsweise sind dies Drehzahländerungen oder Drehzahlanpassungen, welche im normalen Betrieb des hydraulischen Systems, beispielsweise einer Heizungsanlage, nicht auftreten oder diesen normalen Betrieb nicht beeinträchtigen. So wird der normale Betrieb des hydraulischen Systems durch das Schalten der mechanischen Schalteinrichtung nicht beeinträchtigt.

Gattungsgemäß ist die mechanische Schalteinrichtung in einer Weise ausgebildet, dass sie auf Druckänderungen aufgrund einer Drehzahländerung des Umwälzpumpenaggregates derart reagiert, dass die mechanische Schalteinrichtung in Abhängigkeit des Druckes wahlweise in eine der Schaltstellungen bewegbar ist. So ist es beispielsweise möglich, dass die Schalteinrichtung so ausgebildet ist, dass sie sich in eine der beiden Schaltstellungen erst bei Erreichen eines bestimmten Grenzdruckes bewegt. So kann durch Erhöhung des Druckes in dem hydraulischen System auf oder über diesen Grenzdruck hinaus erreicht werden, dass die Schalteinrichtung z. B. in eine zweite Schaltstellung bewegt wird. Dabei ist vorzugsweise das hydraulische System so ausgestaltet, dass im normalen Betrieb in der ersten Schaltstellung dieser Grenzdruck nicht erreicht wird, sodass diese erste Schaltstellung in diesem Betriebszustand sicher beibehalten werden kann. In einem Heizungssystem ist es beispielsweise möglich, dass für eine Brauchwassererwärmung ein höherer Druck erzeugt wird, als zum normalen Betrieb der Heizungsanlage zur Beheizung eines Gebäudes erforderlich ist. So könnte die Schalteinrichtung durch Erhöhung des Druckes über einen vorbestimmten Grenzwert hinaus in die zweite Schaltstellung bewegt werden, welche beispielsweise, wie unten beschrieben wird, benutzt wird, um über die Anlage Brauchwasser zu erwärmen.

Erfindungsgemäß ist die Schalteinrichtung in ihrer Umschaltfunktion jedoch nicht abhängig vom Absolutwert des Druckes gestaltet, sondern so ausgebildet, dass sie auf bestimmte Änderungen des Druckes reagiert, sodass durch gezielte Druckänderungen ein Umschalten von einer Schaltstellung in die andere erreicht wird. So kann insbesondere die Schalteinrichtung in ihrer Schaltfunktion abhängig von der Geschwindigkeit der Druckänderung sein, sodass sie beispielsweise so ausgebildet ist, dass sie sich bei einer schnellen Druckänderung in eine erste Schaltstellung und bei einer langsamen Druckänderung in eine zweite Schaltstellung bewegt.

Erfindungsgemäß ist vorgesehen, die Schalteinrichtung derart auszubilden, dass sie auf Unterschiede im Verlauf eines Druckaufbaus des Fluids bei einer Drehzahländerung des Umwälzpumpenaggregates reagiert, um eine Bewegung zwischen den zwei unterschiedlichen Schaltstellungen zu veranlassen. Das heißt erfindungsgemäß ist eine Kombination eines Umwälzpumpenaggregates und einer mechanischen Schalteinrichtung vorgesehen, welche eine bislang ungenutzte Variabilität des Umwälzpumpenaggregates zur Bewegung der Schalteinrichtung ausnutzt. Während die im Betrieb zu erreichende Drehzahl des Umwälzpumpenaggregates in der Regel vom gewünschten Durchfluss bzw. Differenzdruck in dem hydraulischen Kreis bestimmt und vorgegeben wird, hat das Anfahrverhalten des Umwälzpumpenaggregates in bisherigen hydraulischen Systemen, wie Heizungssystemen, in der Regel keinen Einfluss auf den eigentlichen Betrieb des Systems. Insofern ist es bevorzugt vorgesehen, das Anfahrverhalten bzw. die Art oder den Verlauf einer Drehzahländerung des Umwälzpumpenaggregates durch Variation dazu zu nutzen, über die hydraulische Kopplung die Schalteinrichtung in eine gewünschte Schaltstellung zu bewegen. Das heißt Umwälzpumpenaggregat und Schalteinrichtung sind so ausgebildet, dass die Schalteinrichtung nicht in Abhängigkeit des zu erreichenden Absolut- bzw. Enddruckes und/oder des zu erreichenden Enddurchflusses in dem hydraulischen Kreis in eine gewünschte Schaltstellung bewegt wird, sondern allein in Abhängigkeit des Verlaufes eines Druckaufbaus in dem hydraulischen Kreis in Abhängigkeit eines Verlaufes einer Drehzahländerung des Umwälzpumpenaggregates. Dazu ist die Schalteinrichtung bevorzugt so ausgebildet, dass sie sich bei einer Drehzahländerung des Umwälzpumpenaggregates mit einem ersten Verlauf des Druckaufbaus in eine erste Schaltstellung und bei einer Drehzahländerung des Umwälzpumpenaggregates mit einem von diesem ersten Verlauf abweichenden zweiten Verlauf des Druckaufbaus in die zweite Schaltstellung bewegt. Um die unterschiedlichen Verläufe des Druckaufbaus zu erreichen, wird der Antrieb des Umwälzpumpenaggregates über den Drehzahlsteller in verschiedener Weise angesteuert. Das heißt es ist keine separate elektrische Antriebseinrichtung für die Schalteinrichtung erforderlich, einziges elektrisch anzusteuerndes Bauteil ist vorzugsweise der Antriebsmotor des zumindest einen Umwälzpumpenaggregates. Dieser Antriebsmotor kann durch entsprechende Einstellung des Verlaufes einer Drehzahländerung über den Drehzahlsteller, woraus sich ein unterschiedlicher Verlauf des Druckaufbaus ergibt, gleichzeitig dazu genutzt werden, die entsprechend passend ausgebildete Schalteinrichtung zu betätigen.

Besonders bevorzugt ist die mechanische Schalteinrichtung derart selbsthaltend ausgebildet, dass sie bis zu einer vorbestimmten Drehzahl oder Drehzahländerung des Umwälzpumpenaggregates in der eingenommenen Schaltstellung verbleibt. So kann nach Erreichen der gewünschten Schaltstellung das Umwälzpumpenaggregat insbesondere in herkömmlicher Weise gesteuert bzw. geregelt werden, z. B. um einen gewünschten Differenzdruck über dem Umwälzpumpenaggregat und/oder einen gewünschten Durchfluss in dem hydraulischen Kreis einzustellen. Diese Regelung hat dann keinerlei Einfluss auf die gewählte Schaltstellung. Das heißt im Betrieb ist das Pumpenaggregat bis zu einer definierten Drehzahl oder Drehzahländerung, welche eine Änderung der Schaltstellung der Schalteinrichtung bewirken soll, selbsthaltend. Diese Drehzahländerung ist vorzugsweise eine Drehzahländerung in Form einer Beschleunigung, das heißt eine Erhöhung der Drehzahl aus dem Stillstand des Pumpenaggregates oder ausgehend von einer Basisdrehzahl. Besonders bevorzugt sind das Umwälzpumpenaggregat und die Schalteinrichtung so ausgebildet, dass zum Umschalten zwischen einer ersten und einer zweiten Schaltstellung der Schalteinrichtung die Drehzahl des Umwälzpumpenaggregates zunächst auf eine solche Basisdrehzahl oder bis zum Stillstand reduziert wird und dann ausgehend vom Stillstand oder der Basisdrehzahl ein gewünschter Verlauf der Drehzahlerhöhung und damit ein entsprechend gewünschter Verlauf des Druckaufbaus ausgewählt wird, welcher geeignet ist, die Schalteinrichtung in eine gewünschte der möglichen Schaltstellungen zu bewegen bzw. in einer gewünschten der Schaltstellungen zu halten.

Bevorzugt ist der Drehzahlsteller derart ausgebildet, dass mit seiner Hilfe bzw. durch ihn zumindest zwei unterschiedliche Drehzahlverläufe des Umwälzpumpenaggregates einstellbar sind, wobei der Drehzahlsteller weiter bevorzugt derart ausgebildet ist, dass das Umwälzpumpenaggregat Drehzahländerungen mit zumindest zwei verschiedenen Beschleunigungsverläufen ermöglicht. So kann das Umwälzpumpenaggregat beispielsweise ein Umwälzpumpenaggregat mit einem drehzahlgeregelten Antriebsmotor, insbesondere mit Hilfe eines Frequenzumrichters, sein. Der Drehzahlsteller kann somit bevorzugt so ausgebildet sein, dass er die Drehzahl stufenlos variieren kann. Alternativ kann der Drehzahlsteller jedoch auch so ausgebildet sein, dass er zumindest zwei verschiedene vorbestimmte Drehzahlen oder mehrere vorbestimmte Drehzahlen einstellen kann. Die Drehzahlverläufe können insbesondere Rampen beim Anfahren des Umwälzpumpenaggregates sein, welche von dem Drehzahlsteller vorzugsweise unterschiedlich steil eingestellt werden, wobei die Schalteinrichtung dann vorzugsweise so ausgebildet ist, dass sie bei eine langsamen Drehzahländerung eine erste Schaltstellung und bei einer schnellen Drehzahländerung mit steilerer Rampe eine zweite Schaltstellung einnimmt. Die langsame Drehzahländerung bewirkt einen langsamen Druckaufbau in dem hydraulischen Kreis, die schnelle Drehzahländerung hingegen bewirkt einen schnellen Druckaufbau in dem hydraulischen Kreis. Der unterschiedlich schnelle Druckaufbau überträgt sich auf die Schalteinrichtung, welche erfindungsgemäß so ausgebildet ist, dass sie auf die Geschwindigkeit des Druckaufbaus reagieren kann. Der Druckaufbau kann dabei, insbesondere bei Drehzahlerhöhung, kontinuierlich bzw. stetig erfolgen. Alternativ ist als Drehzahlverlauf auch eine stufenweise Drehzahländerung und damit eine stufenweise Änderung, insbesondere Erhöhung, des Druckes möglich. Dabei kann beispielsweise eine langsame Druckerhöhung so ausgestaltet sein, dass sie in mehreren Schritten bzw. mehreren Stufen erfolgt, während die schnelle Druckerhöhung direkt erfolgt. Auch könnten für die langsamere Druckerhöhung zwischen den Stufen oder Schritten längere Pausen als bei der schnellen Druckerhöhung eingelegt werden. Es ist zu verstehen, dass bei den verschiedenen Verläufen des Druckaufbaus vorzugsweise stets derselbe Enddruck als Betriebsdruck in dem hydraulischen Kreis erreicht wird, so dass nach Betätigung der Schalteinrichtung der sich daran anschließende Betrieb in herkömmlicher Weise ohne Beeinträchtigung erfolgen kann.

Der Drehzahlsteller kann Teil einer übergeordneten oder weitere Funktionen umfassenden Steuereinrichtung sein, welche beispielsweise eine Druck- und/oder Durchflussregelung des Umwälzpumpenaggregates durchführt. Diese Steuereinrichtung kann zusätzlich das Umschalten der mechanischen Schalteinrichtung steuern. Alternativ kann hierfür auch eine separate Steuereinrichtung vorgesehen sein, welche mit dem Drehzahlsteller gekoppelt ist.

Vorzugsweise ist die Schalteinrichtung derart ausgebildet, dass die Bewegungen in die zumindest zwei verschiedenen Schaltstellungen mit unterschiedlichen zeitlichen Verzögerungen erfolgen, wobei vorzugsweise die Bewegungen entlang unterschiedlich langer Wege und/oder entgegen unterschiedlich starker Dämpfungen, Trägheitskräfte und/oder Vorspannkräfte erfolgen. Die Bewegungen in die unterschiedlichen Schaltstellungen erfolgen somit erfindungsgemäß mit unterschiedlicher Dynamik. Die zeitlichen Verzögerungen ermöglichen es, dass durch unterschiedlich schnellen Druckaufbau im hydraulischen System die Schalteinrichtung veranlasst werden kann, eine gewünschte der möglichen Schaltstellungen einzunehmen bzw. beizubehalten. Wenn beispielsweise der Druck schnell erhöht wird, kann die Schalteinrichtung schnell eine Bewegung in eine Schaltstellung vornehmen, welche einer geringeren Verzögerung bzw. Dämpfung unterworfen ist. Eine zweite stärker verzögerte Bewegung wird durch den schnellen Druckaufbau aufgrund der Verzögerung bzw. Dämpfung verhindert bzw. so verlangsamt, dass diejenige Schaltstellung, zu deren Einnahme, eine weniger verzögerte Bewegung erforderlich ist, schneller erreicht wird. Wird jedoch der Druck beispielsweise langsamer erhöht, kann durch die langsame Druckerhöhung die Verzögerung ausgeglichen werden, so dass die Schalteinrichtung beispielsweise in einer Schaltstellung gehalten bzw. in eine Schaltstellung bewegt werden kann, in welcher die stärkere Verzögerung bzw. Dämpfung wirkt. Der unterschiedlich schnelle Druckaufbau kann beispielsweise kontinuierlich mit unterschiedlicher Steigung erfolgen oder aber auch stufenweise z.B. mit unterschiedlich langen Pausen zwischen den Stufen bzw. Schritten erfolgen.

Eine gewünschte Verzögerung kann auf verschiedene Weise erreicht werden, beispielsweise in dem für die einzelnen Schaltstellungen unterschiedlich lange Wege der Schalteinrichtung zurückgelegt werden müssen. Es können alternativ oder zusätzlich Dämpfungselemente Verwendung finden und/oder Reibungs-, Trägheits- oder Vorspannkräfte der Bewegung zu deren Verzögerung entgegenwirken. Auch kann die Schalteinrichtung so ausgestaltet werden, dass die Schwerkraft einer Bewegung in die verschiedenen Schaltstellungen unterschiedlich stark entgegenwirkt. Die Schalteinrichtung kann gezielt so ausgestaltet werden, dass in zumindest einer Bewegungsrichtung in eine erste der Schaltstellungen eine höhere Dämpfung bzw. Verzögerung auftritt, als in einer Bewegungsrichtung in eine zweite Schaltstellung. Dabei ist zu verstehen, dass eine Bewegung in eine der Schaltstellungen im Sinne der Erfindung auch bedeuten kann, dass die Schalteinrichtung in dieser Schaltstellung verbleibt, wenn sie sich zuvor bereits in dieser Schaltstellung befunden hat.

Das Umwälzpumpenaggregat ist mit zumindest zwei hydraulischen Kreisen verbunden und die mechanische Schalteinrichtung über zumindest einen der hydraulischen Kreise derart mit Fluiddruck beaufschlagt, dass die Schalteinrichtung mittels der von dem Fluiddruck erzeugten Kräfte bewegbar ist. Die Schalteinrichtung wird durch den hydraulischen Druck, welcher von dem Umwälzpumpenaggregat erzeugt wird, beaufschlagt, wobei die Schalteinrichtung so ausgebildet ist, dass sie bei Drehzahländerung des Umwälzpumpenaggregates, insbesondere bei Drehzahlerhöhung, wie es oben beschrieben wurde, auf den daraus resultierenden unterschiedlichen Verlauf des Druckaufbaus reagiert, so dass sie in Abhängigkeit von der Art des Verlaufes des Druckaufbaus in eine gewünschte Schaltstellung bewegbar ist. Die Schalteinrichtung kann beispielsweise so angeordnet sein, dass sie über den ersten hydraulischen Kreis mit Druck beaufschlagt wird und eine Schaltfunktion in dem zweiten hydraulischen Kreis bewirkt. Jedoch ist auch bei dieser Funktion das Umschalten bzw. die Bewegung der Schalteinrichtung in die gewünschte Schaltstellung nicht abhängig von der absoluten Höhe eines erreichten Druckes, sondern Abhängig von der Art des Druckverlaufes in dem hydraulischen Kreis, welcher das Umwälzpumpenaggregat mit der Schalteinrichtung verbindet. Besonders bevorzugt können beide hydraulische Kreise mit der Schalteinrichtung verbunden sein und weiter bevorzugt auch beide hydraulischen Kreise mit dem Umwälzpumpenaggregat verbunden sein, wobei das Pumpenaggregat gleichzeitig eine Fluidströmung in beiden hydraulischen Kreisen oder wahlweise, das heißt vorzugsweise umschaltbar, eine Fluidströmung jeweils in einem der hydraulischen Kreise verursacht.

Ferner ist das Umwälzpumpenaggregat mit zumindest zwei hydraulischen Kreisen verbunden und die zumindest eine mechanische Schalteinrichtung ist als zumindest ein Ventil mit zumindest einem beweglichen Ventilelement zur Änderung des Verhältnisses der Durchflüsse durch die zumindest zwei hydraulischen Kreise und insbesondere zum Umschalten eines Strömungsweges zwischen den zumindest zwei hydraulischen Kreisen ausgebildet. So können die zwei hydraulischen Kreise beispielsweise zwei Kreise einer Heizungsanlage, beispielsweise ein erster Kreis durch einen Wärmetauscher zur Erwärmung von Brauchwasser und ein zweiter Kreis als Heizungskreis in einem Gebäude, ausgebildet sein. Die Schalteinrichtung kann entsprechend als Ventil, insbesondere als Umschaltventil ausgebildet sein, um die von dem Umwälzpumpenaggregat erzeugte Strömung wahlweise in einen der hydraulischen Kreise zu lenken. So sind bevorzugt zumindest zwei Schaltstellungen der mechanischen Schalteinrichtung vorgesehen, wobei in einer ersten Schaltstellung die Fluidströmung durch den ersten hydraulischen Kreis und in einer zweiten Schaltstellung durch den zweiten hydraulischen Kreis erfolgt. Das Umschalten erfolgt bevorzugt in Abhängigkeit des Verlaufes des Druckaufbaus bei Drehzahländerung, insbesondere beim Beschleunigen oder Anfahren des Umwälzpumpenaggregates aus dem Stillstand oder ausgehend von einer Basisdrehzahl.

Das Ventil weist zumindest eine erste und eine zweite Steuerfläche auf, auf welche ein von dem Umwälzpumpenaggregat erzeugter Fluiddruck wirkt.

Erfindungsgemäß weist das zumindest eine Ventil zumindest zwei Ventilelemente auf, wobei die erste Steuerfläche mit dem ersten Ventilelement verbunden ist und die zweite Steuerfläche mit dem zweiten Ventilelement verbunden ist. Die Steuerflächen können dabei an den Ventilelementen beispielsweise so angeordnet sein, dass ein auf die Steuerflächen wirkender Fluiddruck eine in Öffnungsrichtung der Ventilelemente wirkende Druckkraft erzeugt, so dass durch einen entsprechend hohen Fluiddruck die Ventilelemente in eine geöffnete Stellung gedrückt werden können. Alternativ ist auch eine umgekehrte Anordnung möglich, bei welcher ein auf die Steuerflächen wirkender Fluiddruck eine in Schließrichtung der Ventilelemente wirkende Druckkraft erzeugt, sodass durch einen entsprechend hohen Fluiddruck die Ventilelemente in eine geschlossene Stellung gedrückt werden können. Erfindungsgemäß weisen die zwei Ventilelemente unterschiedliche dynamische Eigenschaften auf, was beispielsweise durch unterschiedliche Dämpffung, Verzögerung oder der Bewegung entgegengerichtet wirkende Trägheitskräfte erreicht werden kann, wie es vorangehend beschrieben wurde. Durch die unterschiedlichen dynamischen Eigenschaften reagieren die Ventilelemente unterschiedlich auf verschiedene Dynamiken des Druckaufbaus und daher auch auf unterschiedlich schnelle Druckänderungen im System. Wie vorangehend beschrieben, sind dabei die beiden Ventilelemente bevorzugt so ausgestaltet, dass sie sich mit unterschiedlich starker Verzögerung und/oder entgegen unterschiedlich starker Vorspannkräfte bewegen. So kann durch unterschiedliche Geschwindigkeit einer Druckänderung erreicht werden, dass sich wahlweise eines der Ventilelemente zuerst bewegt.

Die Steuerflächen können direkt an einem zugehörigen Ventilelement ausgebildet sein, insbesondere einstückig an dem Ventilelement, welches den Verschluss eines Strömungsweges verursacht, ausgebildet sein. Es ist jedoch auch möglich, dass die Steuerflächen an einem separaten Bauteil ausgebildet sind, welches in geeigneter Weise mit einem zugehörigen Ventilelement verbunden oder zur Bewegungs- und Kraftübertragung gekoppelt ist.

Gemäß einer weiteren bevorzugten Ausführungsform ist die Schalteinrichtung an der Eingangsseite der hydraulischen Kreise gelegen. So kann die Schalteinrichtung beispielsweise an der Eingangsseite der hydraulischen Kreise dazu dienen, eine Strömung wahlweise in einen der hydraulischen Kreise zu lenken. Die Anordnung an der Eingangsseite der hydraulischen Kreise hat den Vorteil, dass auf die Schalteinrichtung an dieser Stelle eine höherer Fluiddruck, nämlich der eingangsseitige Fluiddruck wirkt, welcher noch nicht durch Druckverluste in den hydraulischen Kreisen verringert ist. So steht vorzugsweise ein höherer Fluiddruck zur Bewegung der Schalteinrichtung in eine gewünschte Schaltstellung zur Verfügung.

Weiter bevorzugt ist die Schalteinrichtung an der Druckseite des Umwälzpumpenaggregates angeordnet. Dies bedeutet, dass die Schalteinrichtung in dem Strömungsweg zwischen der Druckseite und der Saugseite des Umwälzpumpenaggregates näher zur Druckseite des Umwälzpumpenaggregates als zur Saugseite hin gelegen ist.Das heißt, dass ein Druckverlust zwischen der Schalteinrichtung und dem stromabwärts gelegenen Umwälzpumpenaggregat größer ist als der Druckverlust zwischen der Ausgangsseite des Umwälzpumpenaggregates und der Schalteinrichtung. Besonders bevorzugt ist die mechanische Schalteinrichtung unmittelbar an oder hinter der Druckseite des Umwälzpumpenaggregates angeordnet, so dass zwischen der Druckseite des Umwälzpumpenaggregates und der Schalteinrichtung im Wesentlichen kein Druckverlust auftritt. Das bedeutet, dass im Vergleich zu dem im Übrigen hydraulischen Kreis auftretenden Druckverlust hier nur ein vernachlässigbarer Druckverlust auftritt. Besonders bevorzugt kann die Schalteinrichtung direkt an der Druckseite des Umwälzpumpenaggregates in ein Pumpengehäuse integriert sein.

Alternativ ist es auch möglich, die mechanische Schalteinrichtung an der Saugseite des Umwälzpumpenaggregates anzuordnen. Das heißt bei dieser Ausführungsform ist die mechanische Schalteinrichtung näher an der Saugseite des Umwälzpumpenaggregates als an der Druckseite gelegen. Das heißt vorzugsweise ist in einem hydraulischen Kreis zwischen Druck- und Saugseite des Umwälzpumpenaggregates ein Druckverlust zwischen der Druckseite des Umwälzpumpenaggregates und der mechanischen Schalteinrichtung größer als zwischen der mechanischen Schalteinrichtung und der Saugseite des Umwälzpumpenaggregates. Die Anordnung der Schalteinrichtung an der Saugseite hat den Vorteil, dass unterschiedliche hydraulische Eigenschaften der hydraulischen Kreise, welche die Druckseite des Umwälzpumpenaggregates mit der Schalteinrichtung verbinden, für die Bewegung der Schalteinrichtung ausgenutzt werden können. So kann beispielsweise einer der hydraulischen Kreise länger sein und/oder einen größeren Strömungswiderstand aufweisen, so dass es über diesen hydraulischen Kreis zu einem verzögerten Druckaufbau an der Schalteinrichtung kommt. Auch die Anordnung an der Saugseite des Umwälzpumpenaggregates, das heißt vorzugsweise somit ausgangsseitig der genannten hydraulischen Kreise ermöglicht ein Umschalten zwischen den hydraulischen Kreisen, je nachdem welcher der hydraulischen Kreise durch die Schalteinrichtung zu der Saugseite des Umwälzpumpenaggregates hin geöffnet wird.

Die Anordnung der Schalteinrichtung an der Saugseite oder der Druckseite des Umwälzpumpenaggregates kann ferner auch von räumlichen oder geometrischen Gestaltungen des hydraulischen Systems bzw. der das hydraulische System bildenden Rohrleitungen abhängig sein.

Gemäß einer weiteren bevorzugten Ausführungsform ist die mechanische Schalteinrichtung stromabwärts eines ersten Wärmetauschers in dem hydraulischen System gelegen. Ein solcher erster Wärmetauscher in dem hydraulischen System führt zu einem Druckverlust zwischen dem Umwälzpumpenaggregat und der mechanischen Schalteinrichtung. In einem Heizungs- bzw. Kühlsystem kann ein solcher erster Wärmetauscher, das heißt ein Primärwärmetauscher, beispielsweise dazu dienen, einen Wärmeträger, welcher in dem hydraulischen System zirkuliert, zu temperieren. So kann der erste Wärmetauscher in einem Heizkessel oder in einem Wärmespeicher gelegen sein oder beispielweise von einem Solarkollektor oder Kälteaggregat gebildet sein.

Die Schalteinrichtung ist ferner vorzugsweise zusätzlich durch Schwerkraft, mit zumindest einer Magnet- und/oder zumindest einer Federkraft beaufschlagt, welche in Richtung zumindest einer Bewegungsachse, d.h. einer Bewegungsrichtung, der Schalteinrichtung wirkt. Weil die Schalteinrichtung als Ventil mit mehreren Ventilelementen ausgebildet ist, können beispielsweise die Ventilelemente in einer Bewegungsrichtung durch eine Vorspannkraft, welche durch Schwerkraft und/oder von einer Magnet- und/oder Federkraft gebildet sein kann, beaufschlagt sein. Im Falle eines Ventils kann das Ventilelement beispielsweise in Schließrichtung von einer solchen Vorspannkraft beaufschlagt sein. Allerdings ist auch eine umgekehrte Ausgestaltung möglich, in welcher die Vorspannkraft das Ventilelement in Öffnungsrichtung beaufschlagt. Eine solche Vorspannkraft kann dazu dienen, die Schalteinrichtung und insbesondere ein Ventilelement der Schalteinrichtung in einer gewünschten Ruhelage zu halten, wenn das Umwälzpumpenaggregat außer Betrieb ist oder beispielsweise gegenüber dem normalen Betrieb mit einer verringerten Basisdrehzahl läuft. So wird sichergestellt, dass die Schalteinrichtung bzw. deren Ventilelemente stets eine definierte Ausgangslage bzw. definierte Ruhe-Schaltstellung einnehmen. Aus dieser Ruhe-Schaltstellung kann dann durch Wahl des Verlaufes des Druckaufbaus durch entsprechende Drehzahlsteuerung des Umwälzpumpenaggregates die Schalteinrichtung in eine gewünschte Schaltstellung bewegt werden. Beispielsweise kann die Schalteinrichtung bei einem ersten Verlauf des Druckaufbaus in ihrer ersten Schaltstellung, welche der Ruhelage entspricht, verbleiben und bei einem abweichenden zweiten Verlauf des Druckaufbaus in eine zweite Schaltstellung bewegt werden.

Vorzugsweise ist die beschriebene Vorspannkraft, das heißt z. B. die Schwerkraft und/oder die zumindest eine Magnet- und/oder Federkraft einer auf die Schalteinrichtung wirkenden von dem Umwälzpumpenaggregat erzeugten hydraulischen Kraft entgegengesetzt gerichtet. So kann die Schalteinrichtung, insbesondere ein Ventilelement der Schalteinrichtung, beispielsweise durch Schwerkraft, Magnet- und/oder Federkraft in einer definierten Ausgangs- bzw. Ruhelage gehalten werden und durch entsprechenden Druckaufbau, welcher eine hydraulische Kraft an einer Steuerfläche der Schalteinrichtung verursacht, entgegen der Vorspannkraft bewegt werden. Die hydraulische Kraft wird dabei von dem Umwälzpumpenaggregat über das geförderte Fluid erzeugt.

Gemäß einer besonders bevorzugten Ausführungsform weist die Schalteinrichtung zumindest zwei Ventilelemente auf, wie es vorangehend beschrieben wurde, wobei in Ruhelage jedes Ventilelement durch eine Vorspannkraft, wie Schwerkraft und/oder eine Magnet- und/oder Federkraft, in einer ersten Schaltstellung gehalten wird und die Ventilelemente sowie die Schwer-, Magnet- und/oder Federkraft so ausgestaltet sind, dass in Abhängigkeit des Verlaufes der Drehzahländerung des Umwälzpumpenaggregates eines der Ventilelemente durch den Fluiddruck zuerst in eine zweite Schaltstellung bewegt wird. Je nach Ausgestaltung kann die erste Schaltstellung eine geschlossene oder eine geöffnete Schaltstellung sein. Entsprechend ist die zweite Stellung eine geöffnete oder geschlossene Schaltstellung. Die Ruhelage nimmt das Ventilelement dabei vorzugsweise dann ein, wenn das Umwälzpumpenaggregat abgeschaltet ist oder sich mit einer Basisdrehzahl dreht, welche geringer als die normale Betriebsdrehzahl ist. Diese Ruhelage wird dabei durch die auftretenden genannte Vorspannkraft definiert und gehalten. Die geschlossene Schaltstellung des Ventilelementes wird dabei erreicht, indem das Ventilelement an einem korrespondierenden Ventilsitz anliegt. Dabei kann eine dichte Anlage vorgesehen sein, durch welche das Ventil vollständig geschlossen ist. Es kann jedoch auch eine Anlage mit einer vorgegebenen minimalen Öffnung vorgesehen sein, so dass der Strömungsweg durch das Ventilelement in der geschlossenen Schaltstellung nicht vollständig geschlossen, sondern nur auf ein Minimum reduziert ist. Über den Fluiddruck wird das Ventilelement in Abhängigkeit des von dem Drehzahlsteller eingestellten Verlaufes der Drehzahländerung bewegt. Je nach Ausgestaltung der Schalteinrichtung wird das Ventilelement dabei in eine geöffnete oder in eine geschlossene Schaltstellung bewegt, so dass der Querschnitt des Strömungsweges zwischen Ventilelement und zugehörigem Ventilsitz vergrößert oder verkleinert wird. Es können beispielsweise unterschiedlich schnelle Verläufe der Drehzahländerungen gewählt werden, um gezielt eines der Ventilelemente in eine der Schaltstellungen bewegen zu können. So kann beispielweise mit einem langsameren Verlauf der Drehzahländerung ein erstes Ventilelement in eine erste Schaltstellung bewegt werden, während mit einem schnelleren Verlauf der Drehzahländerung ein zweites Ventilelement in eine erste Schaltstellung bewegt wird, wobei das jeweils andere Ventilelement in seiner zweiten Schaltstellung verbleibt.

Weiter bevorzugt weisen das erste und das zweite Ventilelement in ihrer Bewegungsrichtung zwischen den Schaltstellungen unterschiedlich große Hübe auf, sind unterschiedlich stark gedämpft und/oder weisen unterschiedlich starke dieser Bewegungsrichtung entgegengesetzte Trägheits-, Reibungs- und/oder Vorspannkräfte auf. Ein unterschiedlich großer Hub der Ventilelemente bedeutet insbesondere den Hub, welcher das Ventilelement zwischen seiner geschlossenen und seiner geöffneten Stellung, oder umgekehrt, zurücklegen muss. Weiter bevorzugt ist dieser Hub derjenige Weg, den das Ventilelement zurücklegen muss, bis, wie weiter unten beschrieben wird, das andere Ventilelement blockiert wird. Durch die unterschiedlich großen Hübe und/oder unterschiedlich starken Dämpfungen oder der Bewegung entgegengesetzte Bremskräfte wie Trägheits-, Reibungs- und/oder Vorspannkräfte kann erreicht werden, dass eines der Ventilelemente schneller auf Druckänderungen reagiert, d. h. öffnet oder schließt, als das andere. So kann in Abhängigkeit der Geschwindigkeit des Druckaufbaus gezielt eines der Ventilelemente in eine erste Schaltstellung bewegt werden. Je nach Ausgestaltung kann die erste Schaltstellung eine geöffnete oder eine geschlossene Schaltstellung des Ventilelementes sein. Anstatt das Ventilelement selber zu dämpfen oder in seiner Bewegung in seine erste Schaltstellung zu verzögern, ist es auch möglich, den Druckaufbau an der Steuerfläche des jeweiligen Ventilelementes zu verzögern. Dies kann beispielsweise durch Drosselelemente im Strömungsweg oder unterschiedlich lange bzw. unterschiedlich ausgestaltete Strömungswege zwischen dem Umwälzpumpenaggregat und den Ventilelementen erreicht werden. So kann durch die gezielte unterschiedliche Gestaltung der Strömungswege zwischen dem Umwälzpumpenaggregat und den Ventilelementen erreicht werden, dass sich ein Druck ausgehend von dem Umwälzpumpenaggregat unterschiedlich schnell zu den Ventilelementen fortpflanzt.

Gemäß einer besonderen Ausführungsform der Erfindung kann zumindest eines der Ventilelemente mit einer Verzögerungseinrichtung versehen sein, wobei die Verzögerungseinrichtung derart ausgebildet ist, dass das Fluid, welches das Ventil an diesem Ventilelement entlang durchströmt, die Verzögerung bewirkt. Das heißt das Ventilelement ist so ausgestaltet, dass es in seiner Bewegung in die geöffnete Schaltstellung durch hydraulische Kräfte verzögert wird, welche durch das Fluid, welches durch das Ventil strömt, selber verursacht werden. Dies hat den Vorteil, dass auf zusätzliche Verzögerungs- oder Dämpfungsmittel, welche fehleranfällig sein könnten, verzichtet werden kann. Verzögernd wirkende hydraulische Kräfte können durch geeignete Führung der Strömungswege erzielt werden. Da das Fluid, welches das Ventil durchströmt, diese Kräfte erzeugt, besteht der Vorteil, dass das Fluid selber die entsprechenden Strömungswege spült, so dass ein Verschmutzen mit damit verbundenen Fehlfunktionen vermieden werden kann.

So kann die Verzögerungseinrichtung beispielweise einen sich quer zu der Bewegungsachse des Ventilelementes zwischen dem Ventilelement und einem korrespondierenden Ventilsitz erstreckenden Ventilspalt aufweisen, welcher vorzugsweise durch eine Bewegung des Ventilelementes entlang der Bewegungsachse in seiner Spaltbreite veränderbar ist. In einem solchen Ventilspalt können bei Durchströmung auf das Ventilelement wirkende Kräfte auftreten, welche hydraulischen Kräften, welche auf eine Steuerfläche des Ventilelementes in einer ersten Bewegungsrichtung wirken, entgegenwirken. Durch Veränderung der Spaltbreite können diese Kräfte sich bei Bewegung des Ventilelementes verändern, insbesondere verringern, sodass sie der Bewegung des Ventilelementes im Wesentlichen nicht entgegenwirken, sondern diese nur verzögern. Das heißt mit der Bewegung des Ventilelementes nehmen die Verzögerungs- bzw. Dämpfungskräfte vorzugsweise ab, was beispielsweise durch eine Vergrößerung des Ventilspaltes, welcher sich quer zur Bewegungsachse erstreckt, bewirkt werden kann. Die erste Bewegungsrichtung kann dabei bevorzugt die Öffnungsrichtung des Ventils sein.

Gemäß einer besonderen Ausführungsform der Erfindung kann das Ventil so ausgestaltet sein, dass der Ventilspalt in einer Schaltstellung geschlossen ist. Dies muss nicht die geschlossene Schaltstellung des Ventils bzw. Ventilelementes sein, vielmehr kann sich der Ventilspalt während der Bewegung schließen und dann gegebenenfalls auch später wieder öffnen. So lassen sich gezielte Verzögerungs- bzw. Dämpfungskräfte generieren.

Beispielsweise kann ein Ventil mit einem der Ventilelemente derart ausgebildet sein, dass das Ventilelement bei seiner Bewegung entlang seiner Bewegungsachse, sich ausgehend von einer ersten Schaltstellung zuerst um ein bestimmtes Maß schließt und darauffolgend weiter öffnet. Die erste Schaltstellung kann dabei die geschlossene Schaltstellung sein, während die zweite Schaltstellung die geöffnete Schaltstellung ist. In dem Ventilelement kann ein Ventilspalt, wie er vorangehend beschrieben wurde, ausgebildet sein. Wenn dieser Ventilspalt sich zunächst bei der Bewegung des Ventilelementes um ein bestimmtes Maß schließt, können so zunehmende Dämpfungs- bzw. Verzögerungskräfte bei der Bewegung des Ventilelementes erzeugt werden. Wenn diese Kräfte jedoch geringer sind als die hydraulischen Kräfte, welche durch den Fluiddruck an der Steuerfläche des Ventilelementes erzeugt werden, wird das Ventilelement weiter bewegt und sich weiter öffnen, wobei sich beispielsweise der Ventilspalt wieder vergrößern kann, sodass sich dann die Dämpfungs- bzw. Verzögerungskräfte verringern, so dass diese einem Erreichen der zweiten Schaltstellung, d. h. beispielsweise einer vollständigen Öffnung des Ventils bzw. Ventilelementes, dann nicht mehr entgegenwirken.

Gemäß einer besonders bevorzugten Ausführungsform der Erfindung sind das erste und das zweite Ventilelement derart gekoppelt, dass sich stets nur ein Ventilelement in seiner geöffneten Schaltstellung oder stets nur ein Ventilelement in seiner geschlossenen Schaltstellung befinden kann. Das heißt die Ventilelemente sind vorzugsweise so angeordnet bzw. ausgestaltet, dass sie sich gegenseitig in ihrer Bewegung blockieren. Vorzugsweise weisen die Ventilelemente Führungsstifte auf, deren Bewegungsbahnen einander schneiden, sodass, wenn sich ein Führungsstift eines Ventilelementes in der Bewegungsbahn des Führungsstiftes des anderen Ventilelementes befindet, dieses andere Ventilelement an einer Bewegung gehindert wird. Die Führungsstifte dienen weiter bevorzugt der Linearführung der Ventilelemente entlang der vorgegebenen Bewegungsbahnen. Durch die Kopplung bzw. das gegenseitige Blockieren kann erreicht werden, dass, wenn ein Ventilelement beispielweise durch schnellen Druckaufbau sich zuerst in eine zweite Schaltstellung bewegt, sich anschließend ein in seiner Bewegung verzögertes zweites Ventilelementes ebenfalls noch in seine zweite Schaltstellung bewegen kann. Je nach Ausgestaltung kann die erste Schaltstellung eine geöffnete Schaltstellung und die zweite Schaltstellung eine geschlossene Schaltstellung oder aber die erste Schaltstellung eine geschlossene Schaltstellung und die zweite Schaltstellung eine geöffnete Schaltstellung sein. Eine Verzögerung der Bewegung eines Ventilelementes kann beispielsweise auch durch einen längeren Weg, den dieses Ventilelement zurücklegen muss, bis es das andere Ventilelement in seiner Bewegung blockiert, erfolgen.

Besonders bevorzugt ist ein erstes Ventilelement mit einer geringeren Vorspannkraft in einer ersten Bewegungsrichtung vorgespannt als das zweite Ventilelement. Gleichzeitig ist das erste Ventilelement bevorzugt so ausgebildet, dass es bei einem Druckaufbau gegenüber dem zweiten Ventilelement verzögert bewegt wird. Durch diese Ausgestaltung wird erreicht, dass bei einem langsamen Druckaufbau diese Verzögerung kompensiert werden kann und aufgrund der schwächeren Vorspannkraft sich das erste Ventilelement zuerst entgegen der Vorspannkraft in eine zweite, z. B. geöffnete, Schaltstellung bewegt. Wenn der Fluiddruck dann weiter ansteigt, insbesondere soweit ansteigt, dass auch die Vorspannkraft des zweiten Ventilelementes überwunden wird, kann dieses sich aufgrund der Kopplung bzw. Blockade durch das erste Ventilelement nicht mehr in seine zweite Schaltstellung bewegen kann. Wenn umgekehrt jedoch ein schneller Druckaufbau bis zu einem Fluiddruck, welcher die Vorspannkraft des zweiten Ventilelementes überwindet, erfolgt, kann durch die Verzögerung der Bewegung des ersten Ventilelementes verhindert werden, dass dieses sich soweit bewegt, dass es das zweite Ventilelement blockiert, bevor das zweite Ventilelement in seiner zweiten Schaltstellung ist. Das heißt das zweite Ventilelement bewegt sich derart schnell in seine zweite Schaltstellung, dass es schneller in der zweiten Schaltstellung ist als das erste Ventilelement. Wenn das zweite Ventilelement jedoch in seiner zweiten Schaltstellung ist, blockiert es über die Kopplung vorzugsweise das erste Ventilelement derart, dass sich dieses nicht mehr in seine zweite Schaltstellung bewegen kann.

Bevorzugt ist mindestens eines der beiden Ventilelemente so ausgebildet, dass es sich in Richtung seiner Bewegungsachse um ein bestimmtes Maß bewegen kann, den Schaltzustand des Ventils zu ändern, d. h. z. B. ohne das Ventil zu öffnen. Gemäß einer ersten bevorzugten Ausführungsform ist das stärker vorgespannte Ventilelement in dieser Weise ausgebildet. Alternativ oder zusätzlich kann jedoch auch das schwächer vorgespannte Ventilelement in dieser Weise ausgebildet sein. Das stärker vorgespannte Ventil ist dabei vorzugsweise dasjenige Ventil, welches in demjenigen hydraulischen Kreis einer Heizungsanlage gelegen ist, in welchem ein Sekundärwärmetauscher zur Erwärmung von Brauchwasser angeordnet ist. Das schwächer vorgespannte Ventil ist im Falle eines hydraulischen Kreises einer Heizungsanlage bevorzugt dasjenige Ventil, welches in dem hydraulischen Kreis gelegen ist, welcher einen Heizkreis für ein Gebäude bildet. Die Möglichkeit der Bewegung des Ventilelementes ohne Öffnung des Ventils hat den Vorteil, dass sich bei der Kopplung der Ventilelemente das Ventilelement um ein Maß bewegen kann, welches ausreicht, das andere Ventilelement in seiner Bewegung zu blockieren, bevor das erste, d. h. sich zuerst bewegende Ventilelement, seine zweite Schaltstellung erreicht.

Gemäß einer weiteren bevorzugten Ausführungsform ist das hydraulische System so ausgebildet, dass zumindest in bestimmten Betriebszuständen der Durchfluss des Umwälzpumpenaggregates erfasst wird. Der Durchfluss kann durch einen Durchflusssensor oder vorzugsweise durch elektrische Größen des Umwälzpumpenaggregates von einer geeigneten Steuereinrichtung erfasst werden. Bevorzugt wird der Durchfluss während der Drehzahländerung und damit der Druckänderung zur Betätigung der Schalteinrichtung erfasst. Wenn beispielsweise in einer ersten Schaltstellung, in welcher in einem Heizungssystem der Heizkreis eines Gebäudes mit Heizmedium versorgt wird, kein Durchfluss festgestellt wird, ist dies ein Anzeichen dafür, dass kein Wärmebedarf im Heizkreis gegeben ist. Dies kann beispielsweise der Fall sein, wenn in dem Heizkreis alle Thermostatventile geschlossen sind. Die Steuereinrichtung ist bevorzugt so ausgebildet, dass sie dann, wenn kein Durchfluss erfasst wird, die Drehzahl über den Drehzahlsteller nicht weiter erhöht. Eine solche weitere Drehzahlerhöhung würde den Energieverbrauch unnötig erhöhen. Die Steuereinrichtung kann bevorzugt auch so ausgebildet sein, dass sie anhand des Durchflusses die Ventilstellung der Schalteinrichtung erfasst.

Weiter bevorzugt erstrecken sich die Bewegungsachsen bzw. Bewegungsrichtungen des ersten und des zweiten Ventilelementes gewinkelt zueinander, besonders bevorzugt rechtwinklig zueinander, wobei sich die Bewegungsachsen vorzugsweise schneiden. Hierdurch kann eine sehr einfache Blockade bzw. Kopplung der beiden Ventilelemente in der vorangehend beschriebenen Weise erreicht werden. Eine Blockade kann dann beispielsweise dadurch erfolgen, dass ein Ventilelement sich in den Bewegungspfad entlang der Bewegungsachse des anderen Ventilelementes hinein bewegt und so die weitere Bewegung des anderen Ventilelementes blockiert. Besonders bevorzugt können sich, wie vorangehend beschrieben, Führungsstifte der beiden Ventilelemente entlang zueinander gewinkelter bzw. sich schneidender Bewegungsbahnen erstrecken, um eine gegenseitige Blockierung der Ventilelemente zu erreichen, sodass stets nur ein Ventilelement in einer zweiten Schaltstellung sein kann. Dabei kann je nach Ausgestaltung die zweite Schaltstellung eine geöffnete oder eine geschlossene Schaltstellung sein.

Das erfindungsgemäße hydraulische System ist besonders bevorzugt als hydraulisches Heizungs- und/oder Kühlsystem ausgebildet, wobei vorzugsweise von den zumindest zwei hydraulischen Kreisen ein erster hydraulischer Kreis durch ein zu temperierendes Objekt und ein zweiter hydraulischer Kreis durch einen Sekundärwärmetauscher zum Temperieren von Brauchwasser verläuft.

Das zu temperierende Objekt kann beispielsweise ein Gebäude sein und der erste hydraulische Kreis verläuft durch einen oder mehrere Heizkörper oder Fußbodenheizungskreise des Gebäudes. Stromaufwärts beider hydraulischer Kreise kann ein Primärwärmetauscher gelegen sein, durch welchen das Fluid zunächst gefördert wird, um es zu temperieren, das heißt aufzuheizen oder zu kühlen. Wenn Brauchwasser erwärmt oder gekühlt werden soll, wird die beschriebene mechanische Schalteinrichtung vorzugsweise so geschaltet, dass das Fluid von dem Umwälzpumpenaggregat durch den zweiten hydraulischen Kreis gefördert wird, welcher durch den beschriebenen Sekundärwärmetauscher verläuft. Wird eine Temperierung von Brauchwasser nicht gewünscht, wird die mechanische Schalteinrichtung in ihrer andere Schaltstellung gebracht, in welcher das Fluid von dem Umwälzpumpenaggregat durch den ersten hydraulischen Kreis gefördert wird, welcher durch das zu temperierende Objekt verläuft.

Eine solche Ausgestaltung eignet sich insbesondere bei Kompaktheizungsanlagen, wie sie für Wohnungen und kleinere Gebäude verwendet werden. Bei diesen Anlagen ist es von Vorteil, dass durch die erfindungsgemäße Schalteinrichtung, welche ausschließlich durch Variation des Drehzahlverlaufes des Pumpenaggregates betätigt wird, auf einen zusätzlichen Antrieb für die Schalteinrichtung verzichtet werden kann, wodurch sich die Herstellungskosten für eine derartige Heizungsanlage verringern und das Ausfallrisiko reduziert wird.

Besonders bevorzugt weist die Schalteinrichtung ein erstes Ventilelement in dem genannten ersten hydraulischen Kreis auf, welcher durch das zu temperierende Objekt verläuft, und ein zweites Ventilelement in dem zweiten hydraulischen Kreis auf, welcher durch den Sekundärwärmetauscher verläuft, wobei in einer ersten Bewegungsrichtung das erste Ventilelement mit einer geringeren Kraft vorgespannt ist als das zweite Ventilelement und in der zweiten entgegengesetzten Bewegungsrichtung das erste Ventilelement in seiner Bewegung stärker gedämpft oder verzögert ist als das zweite Ventilelement. Je nach Ausgestaltung kann die erste Bewegungsrichtung die Schließrichtung oder die Öffnungsrichtung des Ventilelementes sein. Die zweite Bewegungsrichtung ist dann stets die entgegengesetzte Bewegungsrichtung. Durch diese Ausgestaltung kann erreicht werden, dass mit einer langsameren Drehzahländerung des Umwälzpumpenaggregates und einem damit verbundenen langsameren Verlauf des Druckaufbaus das zweite Ventilelement zuerst in seine zweite Schaltstellung bewegt wird, während durch einen schnelleren Verlauf der Drehzahländerung bzw. einen schnelleren Verlauf des Druckaufbaus zuerst das erste Ventilelement in seine zweite Schaltstellung bewegt wird. Bevorzugt sind die beiden Ventilelemente dabei, wie vorangehend beschrieben, miteinander gekoppelt, so dass, wenn eines der Ventilelemente in seiner zweiten Schaltstellung ist, das andere Ventilelement sich nicht mehr in seine zweite Schaltstellung bewegen kann. Die Drehzahländerung kann dabei linear oder stetig oder auch in Schritten bzw. Stufen gegebenenfalls mit unterschiedlich langen Pausen zwischen den Schritten erfolgen, wie es vorangehend beschrieben wurde.

Weiter bevorzugt sind das Umwälzpumpenaggregat und die zumindest eine Schalteinrichtung in einer gemeinsamen Baueinheit, insbesondere einer integrierten hydraulischen Baueinheit für eine Kompaktheizungsanlage angeordnet. Gegenstand dieser Anmeldung ist daher auch eine solche Baueinheit, insbesondere eine Baueinheit für eine Kompaktheizungsanlage, welche ein Umwälzpumpenaggregat und die zumindest eine Schalteinrichtung enthält. Dabei weisen das Umwälzpumpenaggregat und die Schalteinrichtung vorzugsweise zumindest ein gemeinsames Gehäuseteil auf. Es ist zu verstehen, dass diese Baueinheit zusammen mit einem oder mehreren der vorangehend beschriebenen Merkmale, insbesondere mit Merkmalen der Schalteinrichtung, verwirklicht werden kann.

Die Anordnung in einer Baueinheit bedeutet, dass die Schalteinrichtung und das Umwälzpumpenaggregat in baulicher Nähe zueinander angeordnet sind. Die integrierte hydraulische Baueinheit für eine Kompaktheizungsanlage enthält üblicherweise das Umwälzpumpenaggregat sowie die erforderlichen Ventile und Sensoren und ist weiter bevorzugt direkt mit einem Sekundärwärmetauscher verbunden. Sie muss somit in einer Heizungsanlage über externe Verrohrungen lediglich mit einem Primärwärmetauscher, einen Brauchwasserzulauf, einem Brauchwasserablauf und den Anschlüssen eines externen Heizungskreises verbunden werden. Sie bildet somit den zentralen hydraulischen Bestandteil der Heizungsanlage. Die integrierte hydraulische Baueinheit ist vorzugsweise aus einem oder mehreren Bauteilen gebildet, in denen die erforderlichen Strömungswege zwischen der Schalteinrichtung, dem Umwälzpumpenaggregat und dem genannten Sekundärwärmetauscher gelegen sind. Vorzugsweise sind die Bauteile der integrierten hydraulischen Baueinheit als Spritzgussteile aus Kunststoff gefertigt.

Besonders bevorzugt liegt die Schalteinrichtung direkt an dem Umwälzpumpenaggregat und ist vorzugsweise in ein Pumpengehäuse des Umwälzpumpenaggregates integriert. So kann die Schalteinrichtung beispielsweise im Saugraum des Pumpengehäuses, vorzugsweise hinter oder direkt angrenzend an einer Trennwand, welche den Saugraum vom Druckraum des Pumpengehäuses trennt, gelegen sein. So wird ein besonders kompakter Aufbau erreicht. Alternativ kann die Schalteinrichtung auch an der Druckseite in das Pumpengehäuse integriert sein.

Die Schalteinrichtung weist vorzugsweise drei hydraulische Anschlüsse auf, wobei ein erster hydraulischer Anschluss direkt mit der Saugseite oder der Druckseite des Umwälzpumpenaggregates verbunden ist, ein zweiter hydraulischer Anschluss mit einem durch einen Sekundärwärmetauscher verlaufenden hydraulischen Kreis verbunden ist und ein dritter Anschluss mit einem hydraulischen Kreis verbunden ist, welcher durch ein zu temperierendes Objekt verläuft. Insbesondere in einer integrierten hydraulischen Baueinheit sind die Anschlüsse dabei vorzugsweise so gelegen, dass der zweite hydraulische Anschluss gewinkelt zu dem dritten hydraulischen Anschluss, insbesondere rechtwinklig angeordnet ist. Der dritte hydraulische Anschluss erstreckt sich dabei weiter bevorzugt in der Einbaulage der Baueinheit vertikal nach unten, während der zweite hydraulische Anschluss sich horizontal erstreckt. Dies ist vorteilhaft, da ein Sekundärwärmetauscher, welcher beispielsweise als Plattenwärmetauscher ausgebildet sein kann, in Heizungsanlagen in der Regel an der Rückseite der hydraulischen Baueinheit gelegen ist, während sich die externen Anschlüsse zur Anbindung des hydraulischen Kreises, welcher zu einem zu temperierendes Objekt verläuft, sowie die weiteren externen Anschlüsse, beispielsweise Brauchwasserzulauf und Brauchwasserablauf, in der Regel vertikal nach unten erstrecken. So können die Anschlüsse der Schalteinrichtung direkt mit den erforderlichen Anschlüssen der hydraulischen Baueinheit verbunden sein oder diese bilden. Die gewinkelte Anordnung der Anschlüsse begünstigt darüber hinaus die gewinkelte Anordnung der an den Anschlüssen gelegenen Ventilelemente in der oben beschriebenen Weise, durch welche die Kopplung bzw. gegenseitige Bewegungsblockade erreicht werden kann.

Gemäß einer weiteren besonderen Ausführungsform der Erfindung weist ein Ventilelement der Schalteinrichtung in dem ersten hydraulischen Kreis eine senkrechte Bewegungsachse und ein Ventilelement in dem zweiten hydraulischen Kreis eine horizontale Bewegungsachse auf, wobei sich die horizontale Bewegungsachse vorzugsweise parallel zu einer Drehachse des Umwälzpumpenaggregates erstreckt. Diese Anordnung begünstigt die Integration in eine integrierte hydraulische Baueinheit einer Kompaktheizungsanlage, da sich durch diese Anordnung die spezielle Anordnung der Anschlüsse, wie sie vorangehend beschrieben wurde, ergibt, welche der üblichen Anordnung der Anschlüsse an einer derartigen Baueinheit entspricht. Die Drehachse des Pumpenaggregates ist bei derartigen Baueinheiten in der Regel so gerichtet, dass sie sich normal zu der Erstreckung eines Sekundärwärmetauschers erstreckt, insbesondere parallel zu den Ein- und Ausgängen eines solchen Sekundärwärmetauschers.

Nachfolgend wird die Erfindung beispielhaft anhand der beigefügten Figuren beschrieben. In diesen zeigt:
- Fig. 1: schematisch ein hydraulisches System gemäß der Erfindung,
- Fig. 2: eine Schalteinrichtung für ein hydraulisches System gemäß der Erfindung gemäß einer ersten Ausführungsform in einer Schnittansicht,
- Fig. 3: die Schalteinrichtung gemäß Fig. 2 in einer ersten Schaltstellung,
- Fig. 4: die Schalteinrichtung gemäß Fig. 2 in einer zweiten Schaltstellung,
- Fig. 5: eine Schalteinrichtung für ein hydraulisches System gemäß der Erfindung gemäß einer zweiten Ausführungsform in einer Schnittansicht,
- Fig. 6: die Schalteinrichtung gemäß Fig. 5 in einer ersten Schaltstellung,
- Fig. 7: die Schalteinrichtung gemäß Fig. 5 in einer zweiten Schaltstellung,
- Fig. 8: eine Schnittansicht eines Pumpenaggregates mit einer integrierten Schalteinrichtung gemäß einer dritten Ausführungsform der Erfindung,
- Fig. 9: eine Explosionsansicht eines Umwälzpumpenaggregates mit einer integrierten Schalteinrichtung gemäß einer vierten Ausführungsform der Erfindung,
- Fig. 10: eine Schnittansicht des Pumpengehäuses gemäß Fig. 9,
- Fig. 11: eine Schnittansicht eines Ventils mit Verzögerungseinrichtung,
- Fig. 12: eine Schnittansicht eines Ventilblockes mit dem Ventil gemäß Fig. 11 in einer ersten Schaltstellung,
- Fig. 13: den Ventilblock gemäß Fig. 12 in einer zweiten Schaltstellung,
- Fig. 14: schematisch die zwei unterschiedlichen Federkennlinien zweier Ventile gemäß Fig. 2 - 8 sowie 12 und 13, und
- Fig. 15: eine alternative Ausgestaltung zu der Ausgestaltung gemäß Fig. 10.

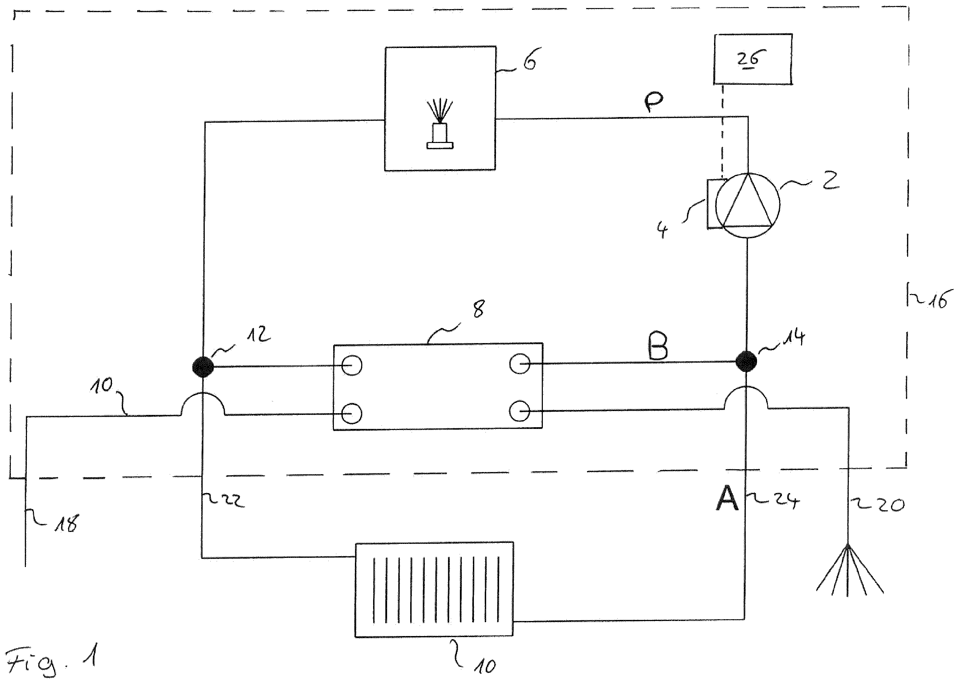

Fig. 1 zeigt eine Heizungsanlage als ein Beispiel für ein hydraulisches System gemäß der Erfindung. Diese Heizungsanlage verwendet einen flüssigen Wärmeträger, insbesondere Wasser, welcher im Kreislauf durch das hydraulische System gefördert wird. Das hydraulische System weist dazu ein Umwälzpumpenaggregat 2 auf. Das Umwälzpumpenaggregat kann in herkömmlicher Weise ausgestaltet sein, das heißt zumindest ein Laufrad aufweisen, welches von einem elektrischen Antriebsmotor angetrieben wird, welcher vorzugsweise als Spaltrohrmotor, das heißt als nasslaufender elektrischer Antriebsmotor ausgebildet ist. Weiter bevorzugt ist direkt an dem Umwälzpumpenaggregat oder in das Umwälzpumpenaggregat integriert eine elektronische Steuerung angeordnet, mittels welcher das Pumpenaggregat in seiner Drehzahl regelbar ist. Die elektronische Steuerung kann dazu insbesondere einen Frequenzumrichter aufweisen. Besonders bevorzugt ist die elektronische Steuerung in einem Elektronikgehäuse bzw. Klemmenkasten 4 angeordnet, welches Teil des Umwälzpumpenaggregates 2 bildet, das heißt insbesondere direkt am Motor- oder Statorgehäuse angeordnet ist.

Das hydraulische System weist ferner einen Primärwärmetauscher 6 auf, welcher stromabwärts des Umwälzpumpenaggregates 2 angeordnet ist. Hier ist der Primärwärmetauscher 6 als Heizkessel gezeigt. Es ist jedoch zu verstehen, dass der Primärwärmetauscher 6 beispielsweise auch ein Kühlaggregat oder eine andere Wärme- oder Kältequelle sein kann. Ferner weist das hydraulische System einen Sekundärwärmetauscher 8 auf, welcher zur Temperierung (hier zur Erwärmung) von Brauchwasser dient. Der Sekundärwärmetauscher 8 weist dazu zwei Strömungswege auf, wobei durch einen ersten Strömungsweg der durch das Umwälzpumpenaggregat 2 und den Primärwärmetauscher 6 verlaufende Heizkreis verläuft und durch einen zweiten Strömungsweg eine Brauchwasserleitung 10 für das zu erwärmende Brauchwasser. Dieser Strömungsweg des Heizkreises durch den Sekundärwärmetauscher 8 bildet einen zweiten hydraulischen Kreis B, während ein erster hydraulischer Kreis A als Raumheizungskreis durch einen oder mehrere Heizkörper 10 eines zu heizenden bzw. zu temperierenden Gebäudes, führt. Es ist zu verstehen, dass als Heizkörper 10 auch andere geeignete Wärmetauchscher, beispielsweise auch ein oder mehrere Kreise einer Fußbodenheizung Verwendung finden könnten. Der erste hydraulische Kreis A und der zweite hydraulische Kreis B bilden über das Umwälzpumpenaggregat 2 und den Primärwärmetauscher 6 jeweils geschlossene hydraulische Kreise, in denen der Wärmeträger umgewälzt wird.

Eingangsseitig zweigen die hydraulischen Kreise A und B an einem Abzweigpunkt 12 voneinander ab und sind ausgangsseitig an dem zweiten Abzweigpunkt 14 wieder miteinander verbunden. Um die von dem Umwälzpumpenaggregat 2 erzeugte Strömung des Wärmeträgers durch den hydraulischen Kreis ausgangsseitig des Primärwärmetauschers 6 wahlweise durch den ersten hydraulischen Kreis A oder den zweiten hydraulischen Kreis B zu leiten, wird an dem Abzweigpunkt 12 oder dem Abzweigpunkt 14 eine Schalteinrichtung in Form eines Umschaltventils angeordnet, welches wahlweise einen der Strömungswege durch einen der hydraulischen Kreise A und B öffnet und den Strömungsweg durch den jeweils anderen hydraulischen Kreis verschließt.

Der in Fig. 1 gestrichelt umrandete Teil des hydraulischen Systems kann in eine Heizungsanlage vorzugsweise in eine Kompaktheizungsanlage 16 integriert sein, wobei alle Bauteile bis auf den Primärwärmetauscher 6 und den Sekundärwärmetauscher 8 in einer Baueinheit wie einem hydraulischen Block integriert sein können. Eine solche Heizungsanlage 16 weist dann im Wesentlichen vier hydraulische Anschlüsse auf, nämlich einmal einen Brauchwassereingang 18 und einen Brauchwasserausgang 20 sowie für den ersten hydraulischen Kreis A einen Vorlaufanschluss 22 und ein Rücklaufanschluss 24. Übe diese vier hydraulischen Anschlüsse 18, 20, 22 und 24 wird die Heizungsanlage 16 in bekannter Weise mit externen Verrohrungen verbunden.

In bekannten Heizungsanlagen 16 ist an dem Abzweigpunkt 12 oder dem Abzweigpunkt 14 ein Umschaltventil angeordnet, welches elektrisch angetrieben wird, um angesteuert von einer Steuereinrichtung, wenn erwärmtes Brauchwasser gefördert wird, den Wärmeträgerstrom durch den Sekundärwärmetauscher 8 zu leiten und dann, wenn Wärme im Raumheizungskreis, das heißt am Heizkörper 10 verlangt wird, den Wärmeträgerstrom durch den ersten hydraulischen Keris A und damit durch den oder die Heizkörper 10 zu leiten. Erfindungsgemäß ist nun vorgesehen, auf einen solchen separaten elektrischen Antrieb einer Umschalteinrichtung bzw. eines Umschaltventils zu verzichten und das Umschalten allein durch geeignete Ansteuerung des Umwälzpumpenaggregates 2 zu bewirken. Dazu ist eine Steuereinrichtung 26 vorgesehen, welche beispielsweise eine zentrale Steuereinrichtung 26 sein kann, welche auch den Primärwärmetauscher 6 in Form eines Brenners steuert und über zumindest einen geeigneten Sensor den Brauchwasserbedarf erfasst. Die Steuereinrichtung 26 kann als separates Bauteil ausgebildet sein oder beispielsweise auch mit der Steuereinrichtung des Umwälzpumpenaggregates 2 zu einer Steuereinrichtung integriert sein, insbesondere auch vollständig in dem Elektronikgehäuse 4 des Umwälzpumpenaggregates 2 angeordnet sein. Die Steuereinrichtung 26 gibt der Steuerung des Umwälzpumpenaggregates 2 ein Signal, ob eine Brauchwassererwärmung oder eine Versorgung des Raumheizungskreises mit dem Wärmeträger gewünscht ist. Die elektronische Steuerung des Umwälzpumpenaggregates 2, welche einen Drehzahlsteller bildet, steuert dann das Umwälzpumpenaggregat 2 so, dass über eine mechanische Schalteinrichtung in dem Abzweigpunkt 12 oder dem Abzweigpunkt 14 die Strömung wahlweise durch einen der hydraulischen Kreise A und/oder B gelenkt wird. Dabei ist die mechanische Schalteinrichtung allein hydraulisch mit dem Umwälzpumpenaggregat 2 über das Fluid, das heißt den Wärmeträger, welcher von dem Umwälzpumpenaggregat 2 gefördert wird, gekoppelt.

Beispiele für derartige Schalteinrichtungen werden nachfolgend beschrieben.

Bei den beschriebenen Ausführungsformen der Erfindung ist die Schalteinrichtung als Ventil mit zwei Ventilelementen ausgebildet, wobei Ausführungsformen zur Anordnung an dem Abzweigpunkt 12 oder zur Anordnung an dem Abzweigpunkt 14 beschrieben werden.

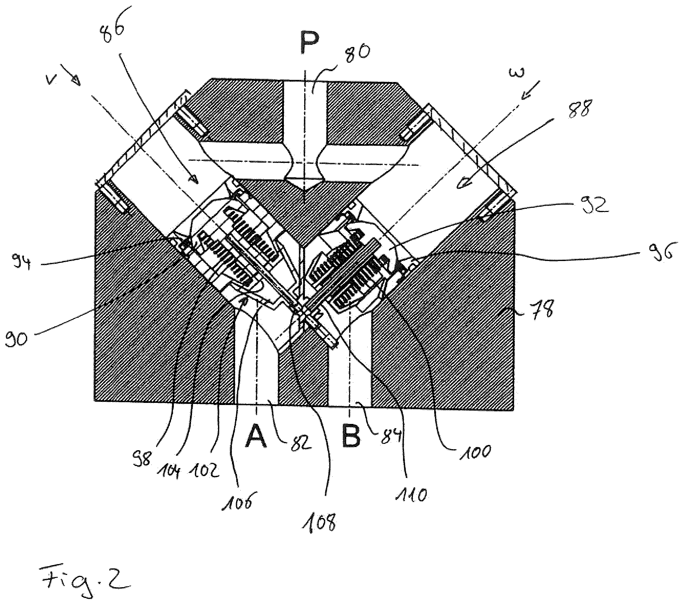

Die anhand der Fig. 2 - 4 beschriebene Ausführungsform einer Schalteinrichtung ist zur Anordnung an der Druckseite des Umwälzpumpenaggregates 2, das heißt am Abzweigpunkt 12 vorgesehen. An diesem Abzweigpunkt 12 wirkt lediglich der Druckverlust des Primärwärmetauschers 6, der wesentlichere Druckverlust in den hydraulische Kreisen A und B erfolgt jedoch zwischen den Abzweigpunkten 12 und 14 durch den Sekundärwärmtauscher 8 und die Heizkörper 10.

Die Schalteinrichtung weist ein Gehäuse in Form eines Ventilblocks 78 auf, welcher einen druckseitigen Anschluss 80 zur Verbindung mit dem Zweig P der hydraulischen Kreise, das heißt der Ausgangsseite des Primärwärmetauschers 6, aufweist. Ferner weist der Ventilblock 78 zwei ausgangsseitige Anschlüsse 82 und 84 auf, von welchen der Anschluss 82 mit dem ersten hydraulischen Kreis A, das heißt über den Vorlaufanschluss 22 mit den Heizkörpern 10, und der Anschluss 84 mit dem zweiten hydraulischen Kreis B, das heißt mit dem Sekundärwärmetauscher 8 verbunden ist.

In dem Ventilblock 78 sind zwei Ventile 86 und 88 angeordnet. Die Ventile 86 und 88 bilden gemeinsam eine Schalteinrichtung und sind jeweils nach Art von Rückschlagventilen ausgestaltet. Dabei liegt das Ventil 86 im Strömungsweg zwischen dem Anschluss 80 und dem Anschluss 82 für den ersten hydraulischen Kreis A und das Ventil 88 liegt im Strömungsweg zwischen dem Anschluss 80 und dem ausgangsseitigen Anschluss 84 für den zweiten hydraulischen Kreis B. In der in Fig. 2 gezeigten Ruhelage sind beide Ventile 86, 88 in einer ersten Schaltstellung geschlossen, das heißt das Ventilelement 90 des Ventiles 86 liegt an dem Ventilsitz 94 und das Ventilelement 92 des Ventils 88 an einem korrespondierenden Ventilsitz 96 an. Das Ventil 86 weist eine Druckfeder 98 und das Ventil 88 eine Druckfeder 100 auf, welche eine Vorspannkraft erzeugen und das jeweilige Ventilelement 90, 92 in die in Fig. 2 gezeigte geschlossene Ruhelage drücken. Die Druckfedern 98 und 100 sind unterschiedlich dimensioniert. Das erste Ventil 86 weist eine schwächere Druckfeder 98 als die Druckfeder 100 des zweiten Ventils 88 auf.

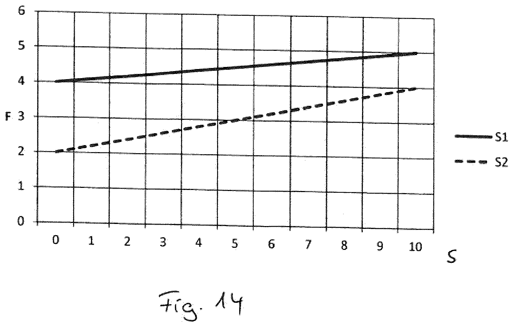

Die unterschiedliche Dimensionierung der Druckfedern 98 und 100 ist in Fig. 14 dargestellt. Fig. 14 zeigt schematisch die Kennlinie S1 der Druckfeder 100 und die Kennlinie S2 der Druckfeder 98. In dem Diagramm gemäß Fig. 14 ist die Kraft F über den Weg S aufgetragen, wobei die Kraft F in diesem Diagramm nicht die Federkraft, sondern der erzeugte Druck bzw. die erzeugte Förderhöhe des Umwälzpumpenaggregates 2 an dessen Druckseite ist. Es ist zu erkennen, dass die schwächere Druckfeder 98 eine geringere Vorspannkraft erzeugt als die stärkere Druckfeder 100. In der geschlossenen Ruhelage, in welcher sich das zugehörige Ventilelement noch nicht in Öffnungsrichtung bewegt hat, ist in diesem Beispiel eine Förderhöhe von 2m erforderlich, um das erste Ventil 86 zu öffnen, während eine Förderhöhe von 4m erforderlich ist, um den Öffnungsvorgang des Ventils 88, welches die stärkere Druckfeder 100 aufweist, zu bewirken. Gleichzeitig ist zu erkennen, dass in diesem Ausführungsbeispiel die schwächere Druckfeder 98 eine etwas steilere Federkennlinie S2 aufweist, wodurch die verzögerte Bewegung des Ventils 86 bzw. dessen Ventilelementes 90 unterstützt wird. An dem Diagramm gemäß Fig. 14 ist zu erkennen, dass bei einem langsamen Druckaufbau beispielsweise zwischen 2m und 4m Förderhöhe das Ventil 86 mit der schwächeren Druckfeder 98 durch Bewegung des zugehörigen Ventilelementes 90 in die zweite Schaltstellung geöffnet werden kann, bevor sich das Ventilelement 92 des zweiten Ventils 88 bewegt. So kann, wie unten beschrieben wird, das Ventilelement 90 zuerst in eine Position bewegt werden, in welcher die Öffnung des Ventilelementes 92 blockiert wird, bevor der Druck soweit erhöht wird, dass auch das Ventilelement 92 in seine geöffnete Position bewegt wird.

Zusätzlich ist das Ventil 86 mit einer Dämpfungs- bzw. Verzögerungseinrichtung 102 versehen. Die Verzögerungseinrichtung 102 weist einen geschlossenen flüssigkeitsgefüllten Raum auf, in welchen ein zylindrischer Kolben 104 des Ventilelementes 90, bei dessen Bewegung in die geöffnete Stellung eintaucht. Über eine als Drosselstelle fungierende Öffnung 106 kann Flüssigkeit aus dem geschlossen Volumen der Verzögerungseinrichtung 102 verzögert entweichen, wenn der Kolben 104 in das Volumen eintaucht. So kommt es zu einer Dämpfung bzw. Verzögerung der Bewegung des Ventilelementes 90 in der Öffnungsrichtung v.

Durch Kombination der schwächeren Druckfeder 98 mit dieser Verzögerungseinrichtung 102 ist es wiederum möglich durch Variation des Druckaufbaus bei Beschleunigung des Pumpenaggregates 2 gezielt eines der Ventile 86 und 88 zu öffnen. Wird ein schneller Druckaufbau, beispielsweise mit einer steilen Rampe für die Beschleunigung oder einem sprunghaften Anstieg auf einen hohen Betriebsdruck gewählt, wird sich das Ventilelement 92, da es in seiner Bewegung nicht verzögert wird, schneller in seiner Öffnungsrichtung w bewegen als das Ventilelement 90, welches über die Verzögerungseinrichtung 102 in seiner Bewegung verzögert wird. Wird ein langsamer Druckaufbau mit mehreren Schritten oder mit einer flacheren Rampe für die Beschleunigung und den Druckaufbau gewählt, wird zuerst ein Druck in dem Anschluss 80 erreicht werden, welcher nur ausreichend ist, die Federkraft der Druckfeder 98, welche schwächer ausgebildet ist, zu überwinden, während der Druck noch nicht ausreicht, das Ventilelement 92 gegen die Drucckraft der Druckfeder 100 zu bewegen. Das heißt, dann wird sich zunächst das Ventilelement 90 in der Öffnungsrichtung v in seine geöffnete Schaltstellung bewegen. Das zweite Ventilelement 92 wird sich erst dann gegen die Druckfeder 100 bewegen, wenn der Druck, welcher auf das Ventilelement 92 an dessen dem Anschluss 80 hydraulisch zugewandter Stirnseite wirkt, ausreichend groß ist, die entgegenwirkende Federkraft zu überwinden.

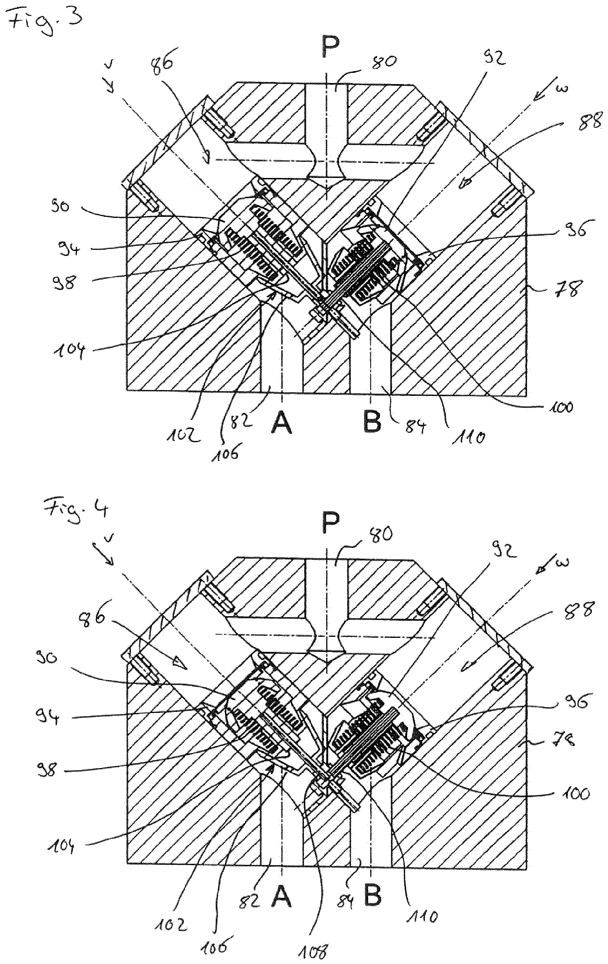

Darüber hinaus sind die Ventilelemente 90 und 92 so ausgestaltet, dass sie mechanisch gekoppelt sind bzw. sich gegenseitig blockieren. Die Bewegungsachsen bzw. Öffnungsrichtungen v und w der beiden Ventilelemente 90 und 92 sind im Winkel von 90° zueinander gewinkelt und schneiden einander. Darüber hinaus weist das Ventilelement 90 an seinem dem Ventilsitz 94 abgewandten Axialende eine stiftförmige Verlängerung 108 auf, welche einen Führungsstift bildet. Entsprechend weist das zweite Ventilelement 92 an seinem dem Ventilsitz 96 abgewandten Ende eine stiftförmige Verlängerung 110 auf, welche einen Führungsstift bildet. Die stiftförmige Verlängerung 108 erstreckt sich in Richtung der Bewegungsachse bzw. Öffnungsrichtung v des Ventilelementes 90. Die stiftförmige Verlängerung 110 erstreckt sich entlang der Längs- bzw. Bewegungsachse bzw. Öffnungsrichtung w des zweiten Ventilelementes 92. Die stiftförmigen Verlängerungen 108 und 110 sind so dimensioniert, dass dann, wenn sich das Ventilelement 90 in seiner geöffneten Position befindet, dessen stiftförmige Verlängerung 108 in die Bewegungsbahn des Ventilelementes 92 hineinragt, so dass dessen stiftförmige Verlängerung 110 am Außenumfang der stiftförmigen Verlängerung 108 zur Anlage kommt. Dieser Zustand ist in Fig. 4 gezeigt. Dies verhindert, dass wenn das erste Ventilelement beim langsamen Druckaufbau zuerst öffnet, sich bei weiterer Druckerhöhung auch das zweite Ventilelement 92 in seine geöffnete Position bzw. Schaltstellung bewegen kann. Das heißt auch wenn der Druck im Anschluss 80, welcher auf das Ventilelement 92 wirkt, soweit ansteigt, dass die hydraulische Kraft die Kraft der Druckfeder 100 übersteig, kann sich das Ventilelement 92 nicht mehr in seine geöffnete Stellung bewegen. Wenn umgekehrt das zweite Ventilelement 92 zuerst öffnet, bewegt sich dessen stiftförmige Verlängerung 110 in die Bewegungsbahn der stiftförmigen Verlängerung 108 des ersten Ventilelementes 90, so dass bei einer Öffnungsbewegung die stiftförmige Verlängerung 108 des Ventilelementes 90 am Außenumfang der stiftförmigen Verlängerung 110 anstößt, wie in Fig. 3 gezeigt ist. Das heißt, wenn sich das Ventilelement 92 bei schnellem Druckaufbau zuerst in seine geöffnete Position bewegt, kann sich das erste Ventilelement 90 anschließend nicht mehr in seine geöffnete Position bzw. Schaltstellung bewegen und es wird eine zweite Schaltstellung der gesamten Ventilanrodnung erreicht.

So kann auch bei dieser Ausführungsform die Schalteinrichtung allein durch die hydraulische Kraft, welche vom Umwälzpumpenaggregat 2 auf die geförderte Flüssigkeit bzw. den Wärmeträger wirkt, geschaltet werden. Diese hydraulische Kraft wirkt in Form in eines Druckes auf die Steuerflächen der Ventilelemente 90 und 92. Da die Ventilelemente 90 und 92 beide am Abzweigpunkt 12 liegen, ist die Verzögerung des Druckaufbaus vom Umwälzpumpenaggregat 2 bis zu dem Ventilelementen 90 und 92 gleich. Dennoch reagieren beide Ventile 86 und 88 nicht gleich schnell, da das Ventilelement 90 des Ventils 86 in seiner Bewegung durch das Verzögerungselement 102 gebremst wird und so die Ventile 86 und 88 eine unterschiedliche Dynamik aufweisen.

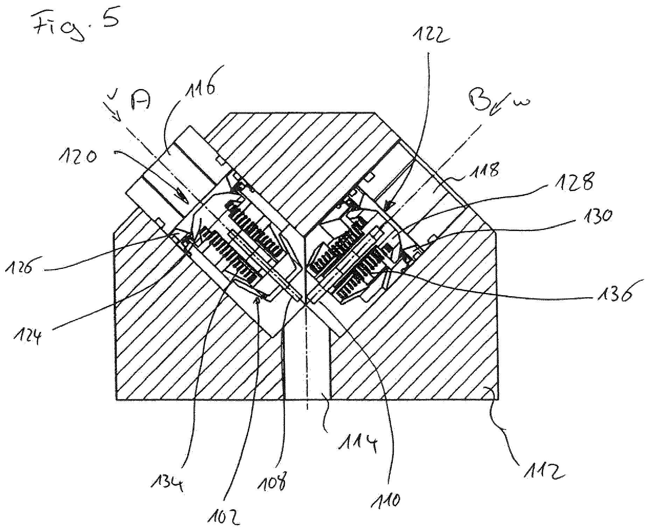

Die Fig. 5 - 7 zeigen ein weiteres Ausführungsbeispiel für eine Schalteinrichtung ähnlich der Schalteinrichtung, welche anhand von Fig. 3 und 4 beschrieben wurde, mit dem Unterschied, dass die Schalteinrichtung gemäß Fig. 5 - 7 zur Anordnung am Abzweigpunkt 14, das heißt an der Saugseite des Umwälzpumpenaggregates 2 vorgesehen ist.

Bei dieser Ausführungsform weist der Ventilblock 112 einen Auslass 114 auf, welcher zur Verbindung mit der Saugseite des Umwälzpumpenaggregates 2 vorgesehen ist. Ferner sind in dem Ventilblock zwei Einlässe 116 und 118 vorhanden, wobei der Einlass 116 mit der Ausgangsseite des hydraulischen Kreises A und der Einlass 118 mit der Ausgangsseite des hydraulischen Kreises B verbunden ist. Das bedeutet, der Einlass 116 weist eine Verbindung zu dem Rücklaufanschluss 24 und der Einlass 118 eine Verbindung zu dem Sekundärwärmetauscher 8 auf, sofern der Ventilblock 112 bei dem Ausführungsbeispiel gemäß Fig. 1 zum Einsatz kommt. In dem Einlass 116 ist ein erstes Ventil 120 und in dem Einlass 118 ein zweites Ventil 122 angeordnet. Fig. 5 zeigt die eine Ruhelage bildende erste Schaltstellung der beiden Ventile 120, 122, wobei von dem Ventil 120 das Ventilelement 124 an einem Ventilsitz 126 anliegt. In dem zweiten Ventil 122 liegt ein Ventilelement 128 an einem Ventilsitz 130 an. Jedes der Ventile weist eine Druckfeder 132, 134 auf, welche die Ventilelemente 124 und 128 in die in Fig. 5 gezeigte geschlossene Position drücken. Auch bei dieser Ausführungsform ist die Druckfeder 134 schwächer ausgebildet als die Druckfeder 136. D. h. die Druckfeder 136 weist wie anhand der vorangehenden Ausführungsform erläutert eine größere Federkonstante und/oder eine größere Vorspannung als die Druckfeder 134 auf. Das Ventil 120 ist darüber hinaus mit einer Verzögerungseinrichtung 102 versehen, wie sie anhand der Fig. 2 - 4 beschrieben wurde. Es wird an dieser Stelle auf diese Beschreibung verwiesen. Auch weisen die Ventilelemente 124 und 128 stiftförmige Verlängerungen 108 und 110 auf, wie sie anhand der Fig. 2 - 4 beschrieben wurden. Im Unterschied zu dem Ausführungsbeispiel gemäß Fig. 2 - 4 wirkt auf die Ventile 120 und 122 gemäß Fig. 5 - 8 nicht eine einheitliche Drucckraft auf die Steuerflächen an den den Einlässen 116 und 118 zugewandten Seiten der Ventilelemente 124 und 128. Stattdessen wirkt eine einheitliche Saugkraft über den Auslass 114 auf die entgegengesetzte Seite der Ventilelemente 124 und 128. Jedoch kann auch bei diesem Ausführungsbeispiel aufgrund der unterschiedlichen Ventildynamik ein Schalten der Ventile 120 und 122 allein über die Art des Verlaufes des Druckanstieges bei Beschleunigung des Umwälzpumpenaggregates 2 erreicht werden.

Wird eine schnelle Beschleunigung mit einem schnellen Druckaufbau auf einen vorbestimmten Druck, welcher ausreicht, die Kraft der stärkeren Druckfeder 136 zu überwinden, gewählt, wird sich schnell ein ausreichend starker Unterdruck an dem Auslass 114 und über den hydraulischen Kreis B ein Druck an dem Einlass 118 aufbauen, welcher gegen die Druckfeder 136 das Ventilelement 128 in der Öffnungsrichtung w verschiebt und das Ventil 122 so öffnet. Gleichzeitig verschiebt sich die stiftförmige Verlängerung 110 des Ventilelementes 128 in den Bewegungspfad des Ventilelementes 124 und dessen zugehöriger stiftförmiger Verlängerung 108. So wird bei geöffnetem Ventil 122 eine Öffnung des in seiner Bewegung verzögerten Ventils 120 unterbunden, indem die stiftförmige Verlängerung 108 des Ventilelementes 124 an der stiftförmigen Verlängerung 110 anschlägt. So wird eine erste Schaltstellung der gesamten Ventilanordnung erreicht. Die verzögerte Bewegung des Ventilelementes 124 erfolgt über die Verzögerungseinrichtung 102. Zusätzlich kann der Druckaufbau zu dem Einlass 116 über den ersten hydraulischen Kreis A, wie oben anhand des ersten Ausführungsbeispiels beschrieben, verzögert erfolgen. Bei entsprechender Auslegung könnte auch diese Verzögerung ausreichen, so dass auf die Verzögerungseinrichtung 102 in diesem Ausführungsbeispiel verzichtet werden könnte.

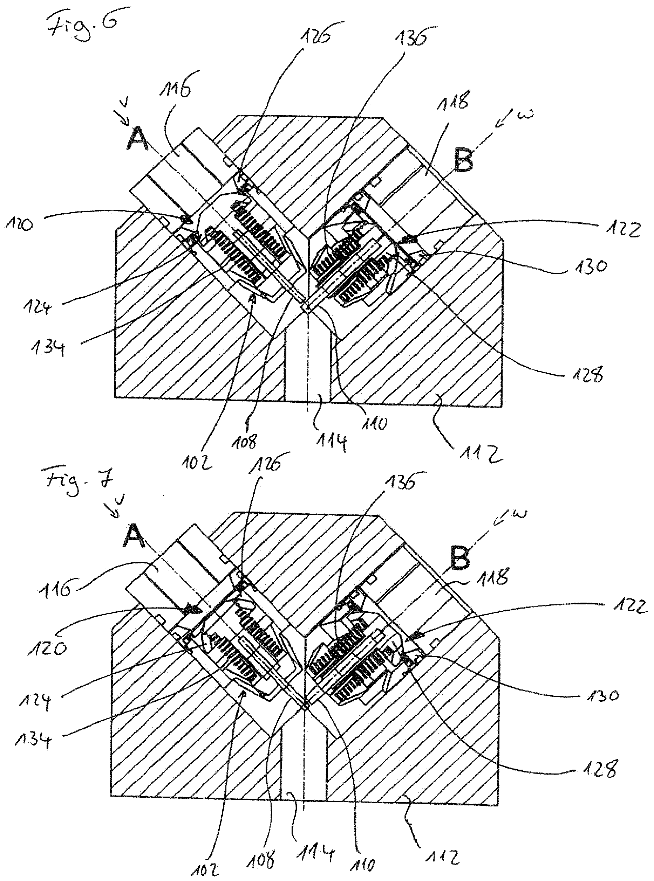

Erfolgt der Druckaufbau langsamer oder stufenweise zunächst auf einen Druck, welcher geringer ist, als der Druck, welcher erforderlich ist, das Ventilelement 128 gegen die Druckfeder 136 zu verschieben, wird sich aufgrund der geringeren Federkraft der Druckfeder 134 zunächst nur das Ventilelement 124 in der Öffnungsrichtung v bewegen, wie in Fig. 7 gezeigt ist. D. h. das Ventil 120 öffnet zuerst. Über die stiftförmige Verlängerung 108 wird dann das zweite Ventil 122 blockiert, so dass dieses sich nicht mehr öffnen kann. So wird eine zweite Schaltstellung der von den Ventilen 120 und 122 gebildeten Ventilanordnung erreicht. Beim Abschalten des Umwälzpumpenaggregates und Druckabbau bewegen sich die Ventilelemente 124 bzw. 128 über ihre Druckfedern 134 und 136 wieder in die in Fig. 5 gezeigte Ausgangslage zurück.

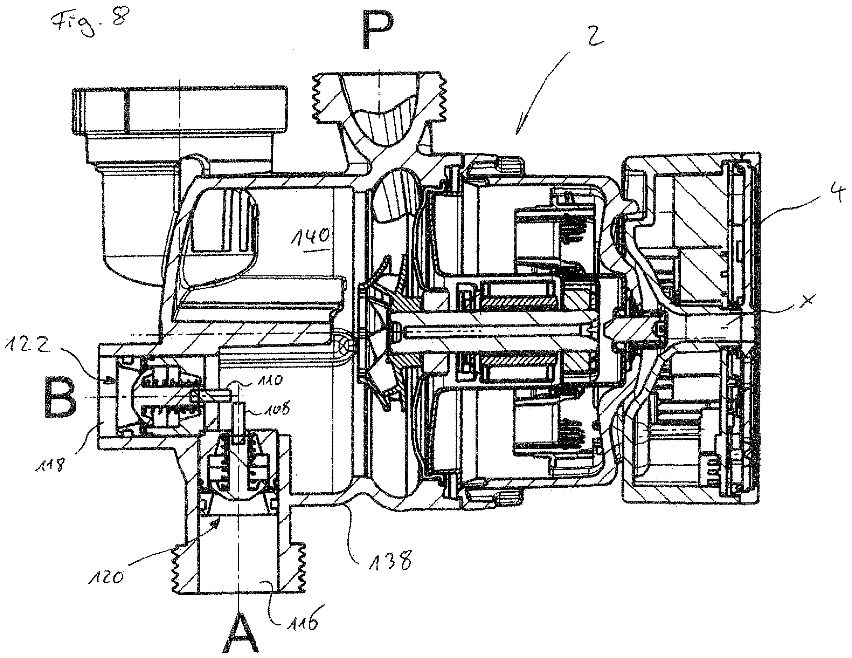

Die Anordnung zweier Ventile 120 und 122, wie sie anhand der Fig. 5 - 7 beschrieben wurde, kann auch direkt in ein Pumpengehäuse 138 eines Umwälzpumpenaggregates 2 integriert werden. Bei dieser in Fig. 8 gezeigten Anordnung münden die Ausgangsseiten der beiden Ventile 120 und 122 nicht in einen gemeinsamen Auslass 114, wie in den Fig. 5 - 7 gezeigt, sondern direkt in den Saugraum 140 im Inneren des Pumpengehäuses 138. So kann die Aufnahme für die Ventile 120 und 122 einstückig mit dem Pumpengehäuse 138 ausgebildet werden. Insbesondere eignet sich eine solche Ausgestaltung dazu, direkt in eine Kompaktheizungsanlage, insbesondere in den hydraulischen Block einer solchen Kompaktheizungsanlage integriert zu werden. So kann der Einlass 116 direkt den Rücklaufanschluss 24 für den Raumheizungskreis bilden und der Einlass 118 kann direkt mit dem Sekundärwärmetauscher 8 verbunden werden.

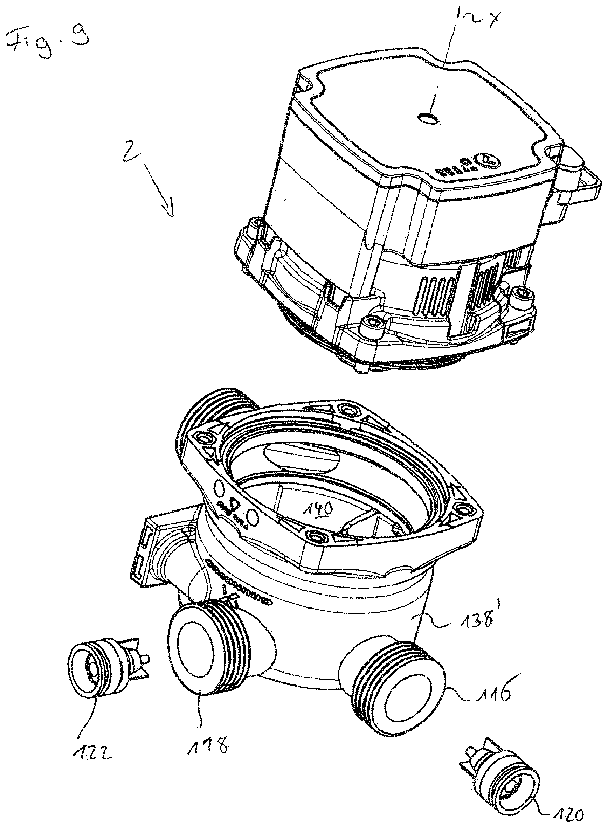

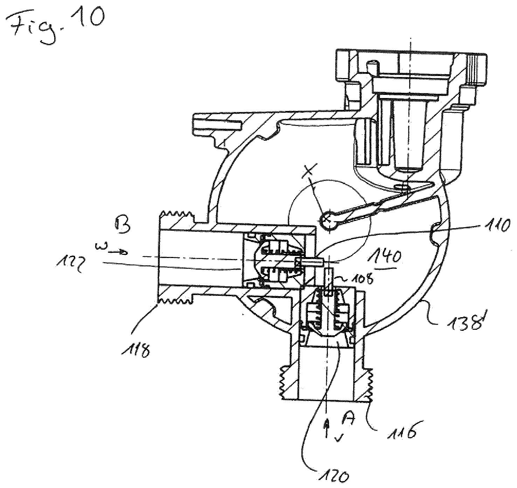

Fig. 9 und 10 zeigen eine alternative Ausgestaltung zu der Anordnung gemäß Fig. 8, welche sich von der in Fig. 8 gezeigten Anordnung nur dadurch unterscheidet, dass der Einlass 118 nicht rückseitig in einer Richtung parallel zur Drehachse X des Umwälzpumpenaggregates gerichtet ist, sondern seitlich in einem Winkel von 90° zu dem Einlass 116 gerichtet ist, so dass beide Einlässe 116 und 118 rechtwinklig zueinander und rechtwinklig zur Drehachse X des Umwälzpumpenaggregates gerichtet sind. Eine solche Anordnung kann gegenüber der in Fig. 8 gezeigten Anordnung beispielsweise dann von Vorteil sein, wenn ein Sekundärwärmetauscher 8 nicht rückseitig sondern seitlich an das Pumpengehäuse 138' angesetzt werden soll.

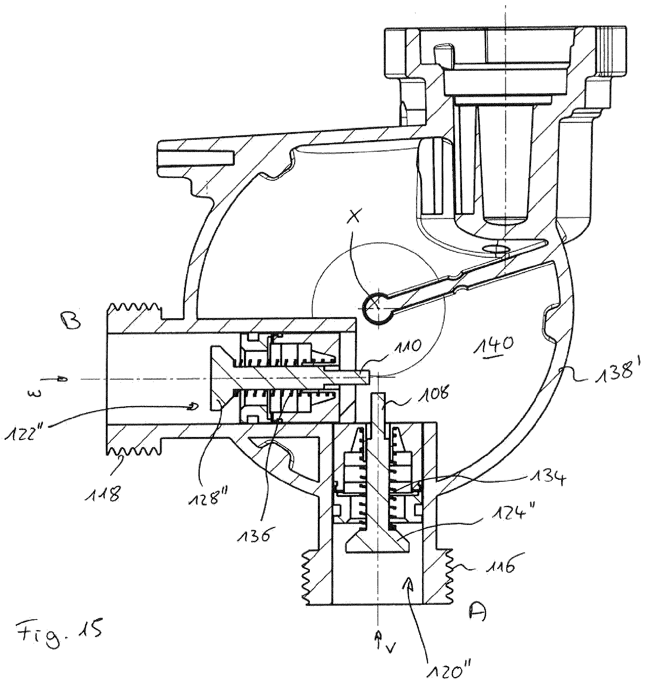

Hinsichtlich der Funktionsweise der die Schalteinrichtung bildenden Ventile 120 und 122 bei den Ausführungsformen gemäß Fig. 8 - 10 wird auf die vorangehende Beschreibung bezüglich der Fig. 2 - 7 verwiesen. In den vorangehend beschriebenen Ausführungsbeispielen sind die Ventile 86, 88, 120, 120' und 122 so ausgebildet, dass sie in ihrer ersten, die Ruhelage bildenden Schaltstellung geschlossen sind und durch die auftretenden hydraulischen Kräfte gezielt in eine geöffnete zweite Schaltstellung bewegt werden. Es ist jedoch zu verstehen, dass die Ventile auch in umgekehrter Weise ausgebildet sein können und in ihrer ersten, eine Ruhelage bildenden Schaltstellung geöffnet sind. Durch die auftretenden hydraulischen Kräfte, welche von dem Unwälzpumpenaggregat verursacht werden, können die Ventile dann gezielt in eine zweite geschlossene Schaltstellung bewegt werden. Ein solches Ausführungsbeispiel ist in Fig. 15 gezeigt, welche eine alternative Ausgestaltung zu der in Fig. 10 gezeigten Ausgestaltung darstellt. Bei der Ausführungsform gemäß Fig. 15 sind anstelle der Ventile 120 und 122 Ventile 120" und 122" mit Ventilelementen 124" und 128" gezeigt, welche jeweils durch Druckfedern 134 und 136 in der vorangehend beschriebenen Weise in ihrer ersten Schaltstellung gehalten werden, welche in diesem Fall eine geöffnete Schaltstellung ist. Entsprechend der vorangehenden Beschreibung lassen sich die Ventilelemente 122" und 124" aufgrund der unterschiedlichen Vorspannkräfte und unterschiedlichen dynamischen Eigenschaften durch entsprechende Ansteuerung des Umwälzpumpenaggregates 2 gezielt in eine zweite Schaltstellung bringen, in welcher sie geschlossen sind. Dabei bewirken die stiftförmigen Verlängerungen 108 und 110 wie vorangehend beschrieben ein gegenseitiges Blockieren der Ventile 120" und 122". Die Funktionsweise der Ventile 120" und 122" entspricht dabei der vorangehend beschriebenen Funktionsweise der Ventile 120 und 122. Der einzige Unterschied liegt darin, dass in dem in Fig. 15 gezeigten Beispiel die Ventilelemente 124" und 128" von einer geöffneten in eine geschlossene Position bewegt werden anstatt von einer geschlossenen in eine geöffnete Position.

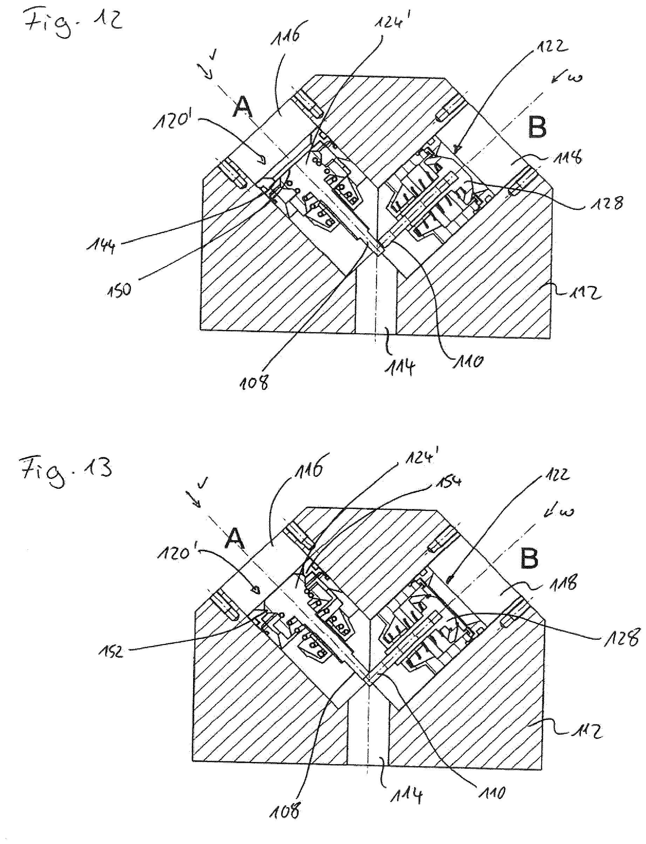

Die Fig. 12 und 13 zeigen eine alternative Anordnung zweier Ventile entsprechend der Ventile 120 und 122, wie sie anhand der Fig. 5 - 10 beschrieben wurden. Das Ventil 122, welches den Strömungsweg zu dem zweiten hydraulischen Kreis B freigibt oder schließt, entspricht dabei der vorangehenden Beschreibung. Das Ventil 120', welches den Strömungsweg zu dem ersten hydraulischen Kreis A freigibt oder schließt, ist in seiner Dämpfungs- bzw. Verzögerungsfunktion anders als in den Ausführungsbeispielen gemäß Fig. 5 - 10 ausgestaltet.

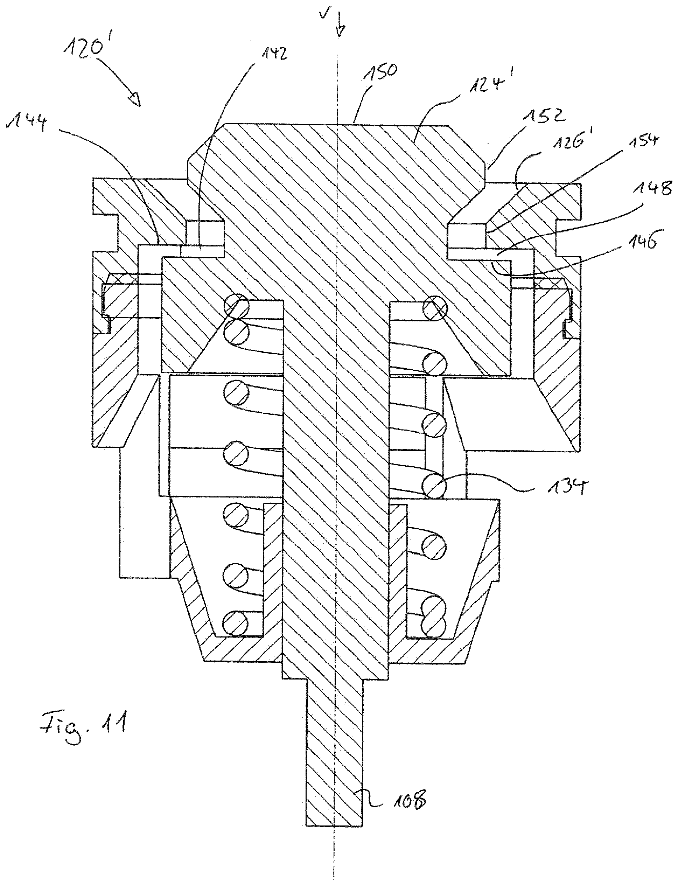

Der Aufbau des Ventils 120' ist vergrößert in einer Schnittansicht in Fig. 11 gezeigt. Das Ventil 120' unterscheidet sich von dem Ventil 120 in dem Aufbau des Ventilelementes 124' und des Ventilsitzes 126'. Fig. 11 zeigt die geschlossene Schaltstellung des Ventils 120'. In dieser Schaltstellung liegt das Ventilelement 124' über einen Vorsprung 142 an einer Innenseite des Ventilsitzes 126' an. Die Innenseite 144 ist dem Einlass 116 abgewandt. Der Vorsprung 142 ist an einer radial nach außen auskragenden Schulter 146 des Ventilelementes 124' gelegen. Der Vorsprung 142 bewirkt, dass in dieser ersten Stellung das Ventil 120' nicht vollständig geschlossen ist, sondern vielmehr zwischen der Schulter 146 und der Innenseite 144 des Ventilsitzes 126' ein radial nach außen gerichteter Ringspalt 148 ausgebildet wird. Durch diesen Ringspalt 148 erfolgt eine radial nach außen gerichtete Strömung, welche nach dem Gesetz von Bernoulli auf den das Ventilelement 124' an der Schulter 46 eine der Öffnungsrichtung v entgegengesetzte Kraft bewirkt. Diese Kraft ist somit in dieselbe Richtung gerichtet, wie die Federkraft der Druckfeder 134. Der Fluiddruck wirkt auf die Stirnseite 150 des Ventilelementes 124', wobei die Stirnseite 150 eine Steuerfläche darstellt. Wenn der Fluiddruck groß genug ist, ist die hydraulische Kraft, welche auf die Steuerfläche 150 wirkt, größer als die Kraft der Druckfeder 134 und die in dem Ringspalt 148 entstehende Axialkraft, so dass das Ventilelement 124' in Öffnungsrichtung bewegt wird. Dabei vergrößert sich die Spaltbreite des Ringspaltes 148, so dass die der Öffnungskraft entgegengesetzt gerichtete hydraulische Kraft an der Schulter 146 verringert wird.

Während der weiteren Bewegung des Ventilelementes 124' in Öffnungsrichtung v bewegt sich eine Ringfläche 152 am Außenumfang des Ventilelementes 124' nahe dessen Stirnseite 150 in den Bereich des Innenumfangs 154 des Ventilsitzes 126'. Die Ringfläche 152 weist einen Durchmesser auf, welcher gleich oder geringfügig kleiner als der Innendurchmesser des Innenumfangs 154 ist. Wenn die Ringfläche 152 dem Innenumfang 154 des Ventilsitzes 126' gegenüberliegt, ist das Ventil 120' im Wesentlichen geschlossen. Diese geschlossene Position ist in Fig. 13 gezeigt. In dieser Position ist das Ventil 122 wie oben beschrieben durch den schnellen Druckaufbau bereits geöffnet und blockiert dann über seine stiftförmige Verlängerung 110 wie oben beschrieben eine weitere Öffnung des Ventils 120' Dies ist sie erste Schaltstellung der Schalteinrichtung. Wenn die weitere Bewegung nicht durch die stiftförmige Verlängerung 110 des Ventilelementes 128 blockiert ist, bewegt sich das Ventilelement 124' weiter in die Öffnungsrichtung v, wobei die Ringfläche 152 den Innenumfang 154 des Ventilsitzes 126' passiert, so dass zwischen der Innenseite 144 und der Stirnseite 150 des Ventilelementes 124', wie in Fig. 12 gezeigt, ein Spalt gebildet wird und so das Ventil 120' in seiner geöffneten zweiten Stellung ist. In dieser Position blockiert wie oben beschrieben die stiftförmige Verlängerung 108 des Ventilelementes 124' das Ventilelement 128 in seiner Bewegung, so dass sich dieses nicht in seine geöffnete Position bewegen kann. In dieser zweiten Schalstelle, ist dann über das Ventil 120' der erste hydraulische Kreis A geöffnet, während der zweite hydraulische Kreis B geschlossen ist.

### Bezugszeichenliste

- 2: - Umwälzpumpenaggregat
- 4: - Elektronikgehäuse
- 6: - Primärwärmetauscher
- 8: - Sekundärwärmetauscher
- 10: - Heizkörper
- 12, 14: - Abzweigpumpe
- 16: - Heizungsanlage
- 18: - Brauchwassereingang
- 20: - Brauchwasserausgang
- 22: - Vorlaufanschluss
- 24: - Rücklaufanschluss
- 26: - Steuereinrichtung, Drehzahlsteller
- 78: - Ventilblock
- 80: - Anschluss
- 82, 84: - ausgangsseitige Anschlüsse
- 86, 88: - Ventile
- 90, 92: - Ventilelemente
- 94, 96: - Ventilsitze
- 98, 100: - Druckfedern
- 102: - Verzögerungseinrichtung
- 104: - Kolben
- 106: - Öffnung
- 108, 110: - stiftförmige Verlängerungen
- 112: - Ventilblock
- 114: - Auslass
- 116, 118: - Einlässe
- 120, 120', 120": - Ventile
- 122, 122": - Ventile
- 124, 124': - Ventilelement
- 126, 126': - Ventilsitz
- 128, 128": - Ventilelement
- 130: - Ventilsitz
- 134, 136: - Druckfeder
- 138, 138': - Pumpengehäuse
- 140: - Saugraum
- 142: - Vorsprung
- 144: - Innenseite
- 146: - Schulter
- 148: - Ringspalt
- 150: - Stirnseite
- 152: - Ringfläche
- 154: - Innenumfang

- A: - erster hydraulischer Kreis
- B: - zweiter hydraulischer Kreis
- P: - gemeinsamer Zweig der hydraulischen Kreise
- v, w: - Öffnungsrichtungen
- x: - Längs- bzw. Drehachse des Pumpenaggregates

## Patentansprüche

1. Hydraulisches System mit zumindest einem mit einem Drehzahlsteller (4, 26) versehenen Umwälzpumpenaggregat (2), zumindest einem mit dem Umwälzpumpenaggregat (2) verbundenen hydraulischen Kreis (A, B) sowie zumindest einer von einem Fluid in dem hydraulischen Kreis mit Druck beaufschlagten mechanischen Schalteinrichtung (86, 88; 120, 122; 120", 122"), welche in zumindest zwei unterschiedliche Schaltstellungen bewegbar ist, wobei
die zumindest eine mechanische Schalteinrichtung (28; 86, 28; 120, 122) von dem Umwälzpumpenaggregat (2) mittels einer hydraulischen Kopplung über das Fluid bewegbar ist und der Drehzahlsteller ausgebildet ist, eine Bewegung der Schalteinrichtung (86, 88; 120, 122, 120", 122") zu veranlassen, indem über eine Drehzahlanpassung des Umwälzpumpenaggregates über den hydraulischen Kreis zumindest eine auf die Schalteinrichtung (86, 88; 120, 122, 120", 122") wirkende und eine Bewegung der Schalteinrichtung (86, 88; 120, 122, 120", 122") verursachende hydraulische Kraft erzeugt wird, wobei das Umwälzpumpenaggregat (2) mit zumindest zwei hydraulischen Kreisen (A, B) verbunden ist und die zumindest eine mechanische Schalteinrichtung (86, 88; 120, 122, 120", 122") als zumindest ein Ventil mit zumindest zwei beweglichen Ventilelementen (90, 92, 124, 124', 128, 124'', 128") zur Änderung des Verhältnisses der Durchflüsse durch die zumindest zwei hydraulischen Kreise (A, B) ausgebildet ist, wobei das zumindest eine Ventil zumindest eine erste und eine zweite Steuerfläche aufweist, auf welche ein von dem Umwälzpumpenaggregat (2) erzeugter Fluiddruck wirkt, wobei die erste Steuerfläche mit einem ersten Ventilelement verbunden und die zweite Steuerfläche mit einem zweiten Ventilelement verbunden ist, so dass die Ventilelemente (90, 92, 124, 124', 128, 124", 128") mittels der auf die erste und zweite Steuerfläche wirkenden Kräfte bewegbar sind, **dadurch gekennzeichnet, dass** die zwei Ventilelemente unterschiedliche dynamische Eigenschaften aufweisen, sodass sie unterschiedlich auf unterschiedlich schnelle Druckänderungen im System reagieren.

2. Hydraulisches System nach Anspruch 1, **dadurch gekennzeichnet, dass** die mechanische Schalteinrichtung (86, 88; 120, 122, 120", 122") in einer Weise ausgebildet ist, dass sie auf Druckänderungen aufgrund einer Drehzahländerung des Umwälzpumpenaggregates (2) derart reagiert, dass die mechanische Schalteinrichtung (86, 88; 120, 122. 120", 122") in Abhängigkeit einer Änderung des Druckes wahlweise in eine der Schaltstellungen bewegbar ist.

3. Hydraulisches System nach Anspruch 1 oder 2, **dadurch gekennzeichnet, dass** die mechanische Schalteinrichtung (86, 88; 120, 122, 120", 122") derart ausgebildet ist, dass sie auf Unterschiede im Verlauf eines Druckaufbaus des Fluids bei einer Drehzahländerung des Umwälzpumpenaggregates (2) derart reagiert, dass die Schalteinrichtung (86, 88; 120, 122, 120", 122") sich bei einer Drehzahländerung des Umwälzpumpenaggregates (2) mit einem ersten Verlauf des Druckaufbaus in eine erste Schaltstellung und bei einer Drehzahländerung des Umwälzpumpenaggregates (2) mit einem von diesem ersten Verlauf abweichenden zweiten Verlauf des Druckaufbaus in eine zweite Schaltstellung bewegt.

4. Hydraulisches System nach einem der vorangehenden Ansprüche, **dadurch gekennzeichnet, dass** die mechanische Schalteinrichtung (86, 88; 120, 122, 120", 122") derart selbsthaltend ausgebildet ist, dass sie bis zu einer vorbestimmten Drehzahländerung des Umwälzpumpenaggregates (2) in der eingenommenen Schaltstellung verbleibt.

5. Hydraulisches System nach einem der vorangehenden Ansprüche, **dadurch gekennzeichnet, dass** das der Drehzahlsteller (4, 26) derart ausgebildet ist, dass durch ihn zumindest zwei unterschiedliche Drehzahlverläufe des Umwälzpumpenaggregates (2) einstellbar sind, wobei der Drehzahlsteller (4, 26) vorzugsweise derart ausgebildet ist, dass das Umwälzpumpenaggregat (2) Drehzahländerungen mit zumindest zwei verschiedenen Beschleunigungsverläufen ermöglicht.

6. Hydraulisches System nach einem der vorangehenden Ansprüche, **dadurch gekennzeichnet, dass** die Schalteinrichtung derart ausgebildet ist, dass die Bewegungen in die zumindest zwei verschiedenen Schaltstellungen mit unterschiedlichen zeitlichen Verzögerungen erfolgen, wobei vorzugsweise die Bewegungen entlang unterschiedlich langer Wege und/oder entgegen unterschiedlich starker Dämpfungen, Trägheitskräfte und/oder Vorspannkräfte erfolgen.

7. Hydraulisches System nach einem der vorangehenden Ansprüche, **dadurch gekennzeichnet, dass** das Ventil zum Umschalten eines Strömungsweges zwischen den zumindest zwei hydraulischen Kreisen (A, B) ausgebildet ist.

8. Hydraulisches System nach einem der vorangehenden Ansprüche, **dadurch gekennzeichnet, dass** die Schalteinrichtung an der Eingangsseite der hydraulischen Kreise (A, B) gelegen ist.

9. Hydraulisches System nach einem der vorangehenden Ansprüche, **dadurch gekennzeichnet, dass** die Schalteinrichtung an der Druckseite des Umwälzpumpenaggregates (2) angeordnet sind.

10. Hydraulisches System nach einem der Ansprüche 1-8, **dadurch gekennzeichnet, dass** die mechanische Schalteinrichtung an der Saugseite des Umwälzpumpenaggregates (2) angeordnet ist.

11. Hydraulisches System nach einem der vorangehenden Ansprüche, **dadurch gekennzeichnet, dass** die mechanische Schalteinrichtung stromabwärts eines ersten Wärmetauschers (6) in dem hydraulischen System gelegen ist.

12. Hydraulisches System nach einem der Ansprüche, **dadurch gekennzeichnet, dass** die Schalteinrichtung zusätzlich durch Schwerkraft, mit zumindest einer Magnet- und/oder mit zumindest einer Federkraft beaufschlagt ist, welche in Richtung zumindest einer Bewegungsachse der Schalteinrichtung wirkt.

13. Hydraulisches System nach Anspruch 12, **dadurch gekennzeichnet, dass** die Schwer-, Magnet- und/oder Federkraft einer auf die Schalteinrichtung wirkenden von dem Umwälzpumpenaggregat (2) erzeugten hydraulischen Kraft entgegengesetzt gerichtet ist.

14. Hydraulisches System nach Anspruch 1 und einem der Ansprüche 12 und 13, **dadurch gekennzeichnet, dass** in Ruhelage jedes Ventilelement (90, 92, 124, 128, 124", 128") durch die Schwer-, Magnet- und/oder Federkraft in einer definierten ersten Schaltstellung gehalten wird und die Ventilelemente sowie die Schwer-, Magnet- und/oder Federkraft so ausgestaltet sind, dass in Abhängigkeit des Verlaufes der Drehzahländerung des Umwälzpumpenaggregates (2) eines der Ventilelemente (90, 92, 124, 128,124", 128") durch den Fluiddruck zuerst in eine zweite Schaltstellung bewegt wird.

15. Hydraulisches System nach einem der vorangehenden Ansprüche, **dadurch gekennzeichnet, dass** das erste und das zweite Ventilelement (90, 92, 124, 128, 124", 128") in ihrer Bewegungsrichtung zwischen den Schaltstellungen unterschiedlich große Hübe aufweisen, unterschiedlich stark gedämpft sind und/oder unterschiedlich starke dieser Bewegungsrichtung entgegengesetzte Trägheits-, Reibungs- und/oder Vorspannkräfte aufweisen.

16. Hydraulisches System nach Anspruch 15, **dadurch gekennzeichnet, dass** zumindest eines der Ventilelemente (90, 92, 124, 128,124", 128") mit einer Verzögerungseinrichtung (102) versehen ist, wobei die Verzögerungseinrichtung (102) derart ausgebildet ist, dass das Fluid, welches das Ventil an diesem Ventilelement entlang durchströmt, die Verzögerung bewirkt.

17. Hydraulisches System nach Anspruch 16, **dadurch gekennzeichnet, dass** die Verzögerungseinrichtung einen sich quer zu der Bewegungsachse des Ventilelementes (124') zwischen dem Ventilelement (124') und einem Ventilsitz (126') erstreckenden, Ventilspalt (148) aufweist, welcher vorzugsweise durch eine Bewegung des Ventilelementes (124') entlang der Bewegungsachse (v) in seiner Spaltbreite veränderbar ist.

18. Hydraulisches System nach Anspruch 17, **dadurch gekennzeichnet, dass** der Ventilspalt in einer Schaltstellung geschlossen ist.

19. Hydraulisches System nach einem der vorangehenden Ansprüche, **dadurch gekennzeichnet, dass** das zumindest eine Ventil mit einem der Ventilelemente derart ausgebildet ist, dass das Ventilelement (124') bei seiner Bewegung entlang seiner Bewegungsachse (v) sich ausgehend von einer ersten Schaltstellung zuerst um ein bestimmtes Maß schließt und darauffolgend weiter öffnet.

20. Hydraulisches System nach einem der vorangehenden Ansprüche, **dadurch gekennzeichnet, dass** das erste und das zweite Ventilelement (90, 92; 124, 128, 124", 128") derart gekoppelt sind, dass sich stets nur ein Ventilelement (90, 92; 124; 128, 124", 128") in seiner geöffneten Schaltstellung oder sich stets nur ein Ventilelement in seiner geschlossenen Schaltstellung befinden kann.

21. Hydraulisches System nach Anspruch 20, **dadurch gekennzeichnet, dass** die Bewegungsachsen (v, w) des ersten und des zweiten Ventilelementes (90, 92; 124, 128, 124", 128") gewinkelt zueinander und vorzugsweise rechtwinklig zueinander verlaufen.

22. Hydraulisches System nach einem der vorangehenden Ansprüche, **dadurch gekennzeichnet, dass** es als hydraulisches Heizungs- und/oder Kühlsystem ausgebildet ist, wobei vorzugsweise von den zumindest zwei hydraulischen Kreisen (A, B) ein erster hydraulischer Kreis (A) durch ein zu temperierendes Objekt und ein zweiter hydraulischer Kreis (B) durch einen Sekundärwärmetauscher (8) zum Temperieren von Brauchwasser verläuft.

23. Hydraulisches System nach Anspruch 22, **dadurch gekennzeichnet, dass** die Schalteinrichtung das erste Ventilelement (90; 124) in dem ersten hydraulischen Kreis (A), welcher durch das zu tem-perierende Objekt verläuft, und das zweite Ventilelement (92; 128) in dem zweiten hydraulischen Kreis (B), welcher durch den Sekundärwärmetauscher (8) verläuft, aufweist, wobei in einer ersten Bewegungsrichtung das erste Ventilelement (90; 124) mit einer geringeren Kraft vorgespannt ist als das zweite Ventilelement (92; 128) und in einer entgegengesetzten Bewegungsrichtung das erste Ventilelement (90; 124) in seiner Bewegung stärker gedämpft oder verzögert ist als das zweite Ventilelement (92; 128).

24. Hydraulisches System nach einem der vorangehenden Ansprüche, **dadurch gekennzeichnet, dass** das Umwälzpumpenaggregat (2) und die zumindest eine Schalteinrichtung in einer gemeinsamen Baueinheit, insbesondere einer integrierten hydraulischen Baueinheit für eine Kompaktheizungsanlage angeordnet sind.

25. Hydraulisches System nach Ansprüchen 23 und 24, **dadurch gekennzeichnet, dass** das erste Ventilelement der Schalteinrichtung (90; 124) in dem ersten hydraulischen Kreis (A) eine senkrechte Bewegungsachse und das zweite Ventilelement (92; 128) in dem zweiten hydraulischen Kreis (B) eine horizontale Bewegungsachse aufweist, wobei sich die horizontale Bewegungsachse vorzugsweise parallel zu einer Drehachse (X) des Umwälzpumpenaggregates (2) erstreckt.

## Claims

1. A hydraulic system with at least one circulation pump assembly (2) provided with a speed controller (4, 26), with at least one hydraulic circuit (A, B) which is connected to the circulation pump assembly (2) as well as with at least one mechanical switch device (86, 88; 120, 122; 120", 122") which is impinged with pressure by a fluid in the hydraulic circuit and which can be moved into at least two different switch positions,
wherein
the at least one mechanical switch device (28; 86, 28; 120, 122) can be moved by the circulation pump assembly (2) by way of a hydraulic coupling via the fluid, and the speed controller is designed to initiate a movement of the switch device (86, 88; 120, 122; 120", 122") by way of at least one hydraulic force which acts upon the switch device (86, 88; 120, 122; 120", 122") and which causes a movement of the switch device (86, 88; 120,122; 120", 122") being produced via a speed adaptation of the circulation pump assembly via the hydraulic circuit, wherein the circulation pump assembly (2) is connected to at least two hydraulic circuits (A, B) and the at least one mechanical switch device (86, 88; 120, 122; 120", 122") is designed as at least one valve with at least one movable valve element (90, 92, 124, 124', 128, 124", 128") for changing the ratio of the flows through the at least two hydraulic circuits (A, B), wherein the at least one valve comprises at least one first and a second control surface, upon which a fluid pressure which is produced by the circulation pump assembly (2) acts, wherein the first control surface is connected to a first valve element and the second control surface to a second valve element so that the valve elements (90, 92, 124, 124', 128, 124", 128") are movable by way of the forces which act upon the first and second control surface, **characterised in that** the two valve elements have different dynamic characteristics, so that they react differently to differently rapid pressure changes in the system.

2. A hydraulic system according to claim 1, **characterised in that** the mechanical switch device (86, 88; 120, 122; 120", 122") is designed in a manner such that it reacts to pressure changes due to a speed change of the circulation pump assembly (2), in a manner such that the mechanical switch device (86, 88; 120, 122; 120", 122") can be selectively moved into one of the switch positions in dependence on the pressure or a change of the pressure.

3. A hydraulic system according to claim 1 or 2, **characterised in that** the mechanical switch device (86, 88; 120, 122; 120", 122") is designed in a manner such that it reacts to differences in the course of a pressure build-up of the fluid given a speed change of the circulation pump assembly (2), in a manner such that the switch device (86, 88; 120, 122; 120", 122") moves into a first switch position given a speed change of the circulation pump assembly (1) with a first course of the pressure build-up, and into a second switch position given a speed change of the circulation pump assembly (2) with a second course of the pressure build-up which is different to this first course.

4. A hydraulic system according to one of the preceding claims, **characterised in that** the mechanical switch device (86, 88; 120, 122; 120" 122") is designed in self-holding manner, in a manner such that it remains in the assumed switch position up to a predefined speed change of the circulation pump assembly (2).

5. A hydraulic system according to one of the preceding claims, **characterised in that** the speed controller (4, 26) is designed in a manner such that at least two different speed courses of the circulation pump assembly (2) can be set by it, wherein the speed controller (4, 26) is preferably designed in a manner such that the circulation pump assembly (2) permits speed changes with at least two different acceleration courses.

6. A hydraulic system according to one of the preceding claims, **characterised in that** the switch device is designed in a manner such that the movements into the at least two different switch positions are effected with different temporal delays, wherein preferably the movements are effected along differently long paths and/or counter to differently large damping, inertia forces and/or biasing forces.

7. A hydraulic system according to one of the preceding claims, **characterised in that** the valve is designed for switching-over a flow path between the at least two hydraulic circuits (A, B).

8. A hydraulic system according to one of the preceding claims, **characterised in that** the switch device is situated at the entry side of the hydraulic circuits (A, B).

9. A hydraulic system according to one of the preceding claims, **characterised in that** the switch device is arranged at the delivery side of the circulation pump assembly (2).

10. A hydraulic system according to one of the claims 1-8, **characterised in that** mechanical switch device is arranged at the suction side of the circulation pump assembly (2).

11. A hydraulic system according to one of the preceding claims, **characterised in that** the mechanical switch device is situated downstream of a first heat exchanger (6) in the hydraulic system.

12. A hydraulic system according to one of the preceding claims, **characterised in that** the switch device is additionally subjected to gravitational force, to at least one magnet force and/or to at least one spring force, which acts in the direction of at least one movement axis of the switch device.

13. A hydraulic system according to claim 12, **characterised in that** the gravitational force, magnet force and/or spring force is directed opposite to a hydraulic force which acts upon the switch device and which is produced by the circulation pump assembly (2).

14. A hydraulic system according to claim 1 and one of the claims 12 and 13, **characterised in that** in the idle position, each valve element (90, 92, 124, 128, 124", 128") is held in a defined first switch position by the gravitational force, magnet force and/or spring force, and the valve elements as well as the gravitational force, magnet force and/or spring force are designed such that one of the valve elements element (90, 92, 124, 128, 124", 128") is moved by way of the fluid pressure firstly into a second switch position, in dependence on the course of the speed change of the circulation pump assembly (2).

15. A hydraulic system according to one of the preceding claims, **characterised in that** the first and the second valve element (90, 92, 124, 128, 124", 128") in their movement direction between the switch positions have a differently large travel, are differently greatly damped and/or have inertia forces, friction forces and/or biasing forces which are counter to this movement direction and are differently large.

16. A hydraulic system according to claim 15, **characterised in that** at least one of the valve elements (90, 92, 124, 128, 124", 128") is provided with a delay device (102), wherein the delay device (102) is designed in a manner such that fluid which flows through the valve along this valve element effects the delay.

17. A hydraulic system according to claim 16, **characterised in that** the delay device has a valve gap (148) which extends transversely to the movement axis of the valve element (124') between the valve element (124') and a valve seat (126') and which can be changed in its gap width preferably by way of a movement of the valve element (124') along the movement axis (v).

18. A hydraulic system according to claim 17, **characterised in that** the valve gap is closed in one switch position.

19. A hydraulic system according to one of the preceding claims, **characterised in that** at least one valve with one of the valve elements is designed in a manner such that the valve element (124') with its movement along its movement axis (v), starting from a first switch position firstly closes by a certain amount and thereupon opens further.

20. A hydraulic system according to one of the preceding claims, **characterised in that** the first and the second valve element (90, 92; 124, 128, 124", 128") are coupled in a manner such that always only one valve element (90, 92; 124, 128, 124", 128") can be located in its opened switch position or always only one valve element can be located in its closed switch position.

21. A hydraulic system according to claim 20, **characterised in that** the movement axes (v, w) of the first and of the second valve element (90, 92; 124, 128, 124", 128") run angled to one another and preferably at right angles to one another.

22. A hydraulic system according to one of the preceding claims, **characterised in that** it is designed as a hydraulic heating and/or cooling system, wherein preferably of the at least two hydraulic circuits (A, B), a first hydraulic circuit (A) runs through an object to be temperature-controlled and a second hydraulic circuit (B) runs through a secondary heat exchanger (8) for the temperature control of service water.

23. A hydraulic system according to claim 22, **characterised in that** the switch device comprises the first valve element (90; 124) in the first hydraulic circuit (A) which runs through the object to be temperature-controlled, and the second valve element (92; 128) in the second hydraulic circuit (B) which runs through the secondary heat exchanger (8), wherein the first valve element (90, 124) in a first movement direction is biased with a lower force than the second valve element (92; 128), and in an opposite movement direction the first valve element (90; 124) is more greatly damped or delayed in its movement than the second valve element (92; 128).

24. A hydraulic system according to one of the preceding claims, **characterised in that** the circulation pump assembly (2) and the at least one switch device are arranged in a common construction unit, in particular an integrated hydraulic construction unit for a compact heating facility.

25. A hydraulic system according to claims 23 and 24, **characterised in that** the first valve element of the switch device (90; 124) in the first hydraulic circuit (A) has a perpendicular movement axis, and the second valve element (92; 128) in the second hydraulic circuit (B) has a horizontal movement axis, wherein the horizontal movement axis preferably extends parallel to a rotation axis (X) of the circulation pump assembly (2).

## Revendications

1. Système hydraulique comprenant au moins un groupe de pompes de circulation (2) muni d'un variateur de vitesse (4, 26), au moins un circuit hydraulique (A, B) relié au groupe de pompes de circulation (2) et au moins un dispositif de commutation mécanique (86, 88; 120, 122; 120", 122") soumis à la pression d'un fluide au sein du circuit hydraulique et qui peut être placé dans au moins deux positions de commutation différentes, dans lequel le dispositif de commutation mécanique 28; 86, 28; 120, 122), au moins au nombre de un, du groupe de pompes de circulation (2) peut être déplacé par l'intermédiaire du fluide au moyen d'un couplage hydraulique, et le variateur de vitesse est conçu pour provoquer un déplacement du dispositif de commutation (86, 88; 120, 122, 120", 122") en générant au moins une force hydraulique agissant sur le dispositif de commutation (86, 88; 120, 122; 120", 122") et entraînant un déplacement du dispositif de commutation (86, 88; 120, 122; 120", 122") par l'intermédiaire d'une adaptation de la vitesse de rotation du groupe de pompes de circulation via le circuit hydraulique, dans lequel
le groupe de pompes de circulation (2) est relié à au moins deux circuits hydrauliques (A, B) et le dispositif de commutation mécanique (86, 88; 120, 122; 120", 122"), au moins au nombre de un, est conçu sous la forme d'au moins une vanne munie d'au moins deux éléments de vanne mobiles (90, 92, 124, 124', 128, 124", 128") permettant de modifier le rapport des écoulements à travers les circuits hydrauliques (A, B), au moins au nombre de deux, dans lequel la vanne, au moins au nombre de une, présente au moins des première et seconde surfaces de commande sur lesquelles s'exerce une pression de fluide créée par le groupe de pompes de circulation (2), la première surface de commande étant reliée à un premier élément de vanne et la seconde surface de commande étant reliée à un second élément de vanne, de sorte que les éléments de vanne (90, 92, 124, 124', 128, 124", 128") peuvent être déplacés au moyen des forces s'exerçant sur les première et seconde surfaces de commande,
**caractérisé en ce que** les deux éléments de vanne présentent des propriétés dynamiques différentes, de sorte qu'ils réagissent différemment à des modifications de pression de rapidités différentes au sein du système.

2. Système hydraulique selon la revendication 1, **caractérisé en ce que** le dispositif de commutation mécanique (86, 88; 120, 122; 120", 122") est conçu de façon à réagir à des modifications de pression dues à une modification de la vitesse de rotation du groupe de pompes de circulation (2) de telle manière que le dispositif de commutation mécanique (86, 88; 120, 122; 120", 122") peut être déplacé de manière sélective dans une des positions de commutation en fonction d'une modification de la pression.

3. Système hydraulique selon la revendication 1 ou 2, **caractérisé en ce que** le dispositif de commutation mécanique (86, 88; 120, 122; 120", 122") est conçu de façon à réagir à des différences du profil de mise en pression du fluide lors d'une modification de la vitesse de rotation du groupe de pompes de circulation (2) de telle manière que le dispositif de commutation (86, 88; 120, 122; 120", 122") se déplace dans une première position de commutation lors d'une modification de la vitesse de rotation du groupe de pompes de circulation (2) présentant un premier profil de montée en pression et se déplace dans une seconde position de commutation lors d'une modification de la vitesse de rotation du groupe de pompes de circulation (2) présentant un second profil de montée en pression qui diffère dudit premier profil.

4. Système hydraulique selon l'une des revendications précédentes, **caractérisé en ce que** le dispositif de commutation mécanique (86, 88; 120, 122; 120", 122") est conçu de façon auto-maintenue de telle manière qu'il demeure dans la position de commutation adoptée jusqu'à une modification prédéterminée de la vitesse de rotation du groupe de pompes de circulation (2).

5. Système hydraulique selon l'une des revendications précédentes, **caractérisé en ce que** le variateur de vitesse (4, 26) est conçu de telle manière qu'au moins deux profils de vitesse de rotation différents du groupe de pompes de circulation (2) peuvent être réglés grâce à lui, dans lequel le variateur de vitesse (4, 26) est de manière préférée conçu de telle manière que le groupe de pompes de circulation (2) autorise des modifications de la vitesse de rotation avec au moins deux profils d'accélération différents.

6. Système hydraulique selon l'une des revendications précédentes, **caractérisé en ce que** le dispositif de commutation est conçu de telle manière que les déplacements dans les positions de commutation différentes, au moins au nombre de deux, se font avec des temporisations différentes, les déplacements se faisant de préférence le long de trajets de longueurs différentes et/ou à l'encontre d'amortissements, de forces d'inertie et/ou de forces de précontrainte d'intensités différentes.

7. Système hydraulique selon l'une des revendications précédentes, **caractérisé en ce que** la vanne destinée à la commutation d'un trajet d'écoulement est réalisée entre les circuits hydrauliques (A, B), au moins au nombre de deux.

8. Système hydraulique selon l'une des revendications précédentes, **caractérisé en ce que** le dispositif de commutation est placé côté entrée des circuits hydrauliques (A, B).

9. Système hydraulique selon l'une des revendications précédentes, **caractérisé en ce que** le dispositif de commutation est agencé côté refoulement du groupe de pompes de circulation (2).

10. Système hydraulique selon l'une des revendications 1 à 8, **caractérisé en ce que** le dispositif de commutation mécanique est agencé côté aspiration du groupe de pompes de circulation (2).

11. Système hydraulique selon l'une des revendications précédentes, **caractérisé en ce que** le dispositif de commutation mécanique est placé en aval d'un premier échangeur de chaleur (6) au sein du système hydraulique.

12. Système hydraulique selon l'une des revendications précédentes, **caractérisé en ce que** le dispositif de commutation est en outre soumis à la gravité, à au moins une force magnétique et/ou à au moins une force de ressort, qui s'exerce dans la direction d'au moins un axe de déplacement du dispositif de commutation.

13. Système hydraulique selon la revendication 12, **caractérisé en ce que** la force de gravité, magnétique et/ou de ressort est dirigée à l'encontre d'une force hydraulique générée par le groupe de pompes de circulation (2) et s'exerçant sur le dispositif de commutation.

14. Système hydraulique selon la revendication 1 et l'une des revendications 12 et 13, **caractérisé en ce que**, dans la position de repos, chaque élément de vanne (90, 92, 124, 128, 124", 128") est maintenu par la force de gravité, magnétique et/ou de ressort dans une première position de commutation définie et **en ce que** les éléments de vanne ainsi que la force de gravité, magnétique et/ou de ressort sont conçus de sorte qu'un des éléments de vanne (90, 92, 124, 128, 124", 128"), en fonction du profil de la modification de vitesse de rotation du groupe de pompes de circulation (2), est initialement déplacé dans une seconde position de commutation par la pression de fluide.

15. Système hydraulique selon l'une des revendications précédentes, **caractérisé en ce que** les premier et second éléments de vanne (90, 92, 124, 128, 124", 128") présentent, dans leur direction de déplacement entre les positions de commutation, des courses de différentes longueurs, sont amortis à des degrés différents et/ou présentent des forces d'inertie, de friction et/ou de précontrainte, s'exerçant à l'encontre de ladite direction de déplacement, de différentes intensités.

16. Système hydraulique selon la revendication 15, **caractérisé en ce qu'**au moins un des éléments de vanne (90, 92, 124, 128, 124", 128") est muni d'un dispositif de temporisation (102), le dispositif de temporisation (102) étant conçu de telle manière que le fluide qui traverse la vanne le long dudit élément de vanne provoque la temporisation.

17. Système hydraulique selon la revendication 16, **caractérisé en ce que** le dispositif de temporisation comprend un orifice de passage (148) s'étendant transversalement par rapport à l'axe de déplacement de l'élément de vanne (124') entre l'élément de vanne (124') et un siège de vanne (126'), la largeur d'orifice dudit orifice de passage pouvant de manière préférée être modifiée par un déplacement de l'élément de vanne (124') le long de l'axe de déplacement (v).

18. Système hydraulique selon la revendication 17, **caractérisé en ce que** l'orifice de passage est fermé dans une position de commutation.

19. Système hydraulique selon l'une quelconque des revendications précédentes, **caractérisé en ce que** la vanne, au moins au nombre de une, munie de l'un des éléments de vanne est conçue de telle manière que l'élément de vanne (124') se ferme initialement d'une valeur déterminée à partir d'une première position de commutation lors de son déplacement le long de son axe de déplacement (v) et s'ouvre ensuite.

20. Système hydraulique selon l'une des revendications précédentes, **caractérisé en ce que** les premier et second éléments de vanne (90, 92; 124, 128, 124", 128") sont couplés de telle manière qu'un seul élément de vanne (90, 92, 124, 128, 124", 128") peut se trouver dans sa position de commutation ouverte ou qu'un seul élément de vanne peut se trouver dans sa position de commutation fermée.

21. Système hydraulique selon la revendication 20, **caractérisé en ce que** les axes de déplacement (v, w) des premier et second éléments de vanne (90, 92; 124, 128, 124", 128") s'étendent en faisant un angle l'un par rapport à l'autre et de manière préférée perpendiculairement l'un à l'autre.

22. Système hydraulique selon l'une des revendications précédentes, **caractérisé en ce qu'**il est conçu en tant que système hydraulique de chauffage et/ou de refroidissement, dans lequel de manière préférée, parmi les circuits hydrauliques (A, B), au moins au nombre de deux, un premier circuit hydraulique (A) traverse un objet à réguler en température et un second circuit hydraulique (B) traverse un échangeur de chaleur secondaire (8) permettant une régulation de la température d'eau industrielle.

23. Système hydraulique selon la revendication 22, **caractérisé en ce que** le dispositif de commutation présente le premier élément de vanne (90; 124) au sein du premier circuit hydraulique (A) qui traverse l'objet à réguler en température, et le second élément de vanne (92; 128) au sein du second circuit hydraulique (B) qui traverse l'échangeur de chaleur secondaire (8), suite à quoi, dans une première direction de déplacement, le premier élément de vanne (90; 124) est précontraint avec une force inférieure à celle subie par le second élément de vanne (92; 128) et, dans une direction de déplacement opposée, le déplacement du premier élément de vanne (90; 124) est davantage amorti ou temporisé que ne l'est celui du second élément de vanne (92; 128).

24. Système hydraulique selon l'une des revendications précédentes, **caractérisé en ce que** le groupe de pompes de circulation (2) et le dispositif de commutation, au moins au nombre de un, sont agencés au sein d'un module commun, en particulier un module hydraulique intégré destiné à une installation de chauffage compacte.

25. Système hydraulique selon les revendications 23 et 24, **caractérisé en ce que** le premier élément de vanne du dispositif de commutation (90; 124) au sein du premier circuit hydraulique (A) présente un axe de déplacement vertical et le second élément de vanne (92; 128) au sein du second circuit hydraulique (B) présente un axe de déplacement horizontal, l'axe de déplacement horizontal étant de manière préférée parallèle à un axe de rotation (X) du groupe de pompes de circulation (2).
